(19) Europäisches Patentamt
European Patent Office
Office européen des brevets

(11) EP 0 824 141 B1

(12) EUROPEAN PATENT SPECIFICATION

(45) Date of publication and mention of the grant of the patent: **20.06.2001 Bulletin 2001/25**

(51) Int Cl.[7]: **C09K 19/46**, C09K 19/42, C09K 19/30

(21) Application number: **97112941.6**

(22) Date of filing: **28.07.1997**

# (54) Liquid crystal composition and liquid crystal display element

Flüssigkristallzusammensetzung und Flüssigkristallanzeigeelement

Composition liquide cristalline et élément d'affichage à cristaux liquides

(84) Designated Contracting States:
**DE FR**

(30) Priority: **14.08.1996 JP 23254796**

(43) Date of publication of application:
**18.02.1998 Bulletin 1998/08**

(73) Proprietor: **Chisso Corporation**
**Osaka-shi Osaka 530-0055 (JP)**

(72) Inventors:
- **Tomi, Yoshitaka**
**Ichihara-shi, Chiba-ken (JP)**
- **Takeshita, Fusayuki**
**Kimitsu-shi, Chiba-ken (JP)**
- **Matsushita, Tetsuya**
**Sodegaura-shi, Chiba-ken (JP)**
- **Nakagawa, Etsuo**
**Ichihara-shi, Chiba-ken (JP)**

(74) Representative:
**Hansen, Bernd, Dr. Dipl.-Chem. et al**
**Hoffmann Eitle,**
**Patent- und Rechtsanwälte,**
**Arabellastrasse 4**
**81925 München (DE)**

(56) References cited:
**EP-A- 0 316 715**
**EP-A- 0 423 926**
**EP-A- 0 492 222**
**EP-A- 0 717 093**

Remarks:
The file contains technical information submitted after the application was filed and not included in this specification

EP 0 824 141 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

1. Field of the invention

The present invention relates to a nematic liquid crystal composition and a liquid crystal display element using this liquid crystal composition. More specifically, the present invention relates to a liquid crystal composition suitable for a display element of a super twist nematic twist mode (hereinafter abbreviated to an STN mode) and a liquid crystal display element using this liquid crystal composition.

2. Description of the Related Art

A twist nematic mode, the STN mode and an active matrix mode have been proposed as a display mode for a liquid crystal display element (hereinafter abbreviated to LCD) and put to practical use one after another. Among them, the STN mode proposed by T. J. Scheffer et al [refer to Applied Physics Letters, vol. 45, No. 10, pp. 1021 (1984)] in which the orientation direction of liquid crystal molecules on a pair of the substrate faces of the element is twisted to an angle falling in a range of 180 to 270° has been introduced into a display element for personal computers, word processors and the like.

In recent years, the STN mode has been used as an LCD for electronic notebooks, pocket bells, portable telephones and the like which are used outdoors in many cases. Characteristics required to liquid crystal compositions used for an LCD of the STN mode used outdoors include the following (1) to (4) items:

(1) The liquid crystal compositions have a broad nematic phase temperature area so that the LCD can be used in a wide temperature area. In particular, the clearing point which is the nematic phase upper limit temperature is high.
(2) In order to miniaturize and lighten a battery which is a power source for driving the LCD, the threshold voltage of the liquid crystal composition is low, and the temperature dependency of the threshold voltage is small as well.
(3) In order to optimize the contrast of the LCD, the refraction factor anisotropy of the liquid crystal composition can suitably be settled down according to the cell thickness of the LCD.
(4) In order to maintain semi-permanently the display quality of the LCD, the liquid crystal composition is not degraded by heat and UV rays.

The liquid crystal compound used as the first component of the present invention is disclosed in Japanese Patent Application Laid-Open No. Hei 1-131144, Japanese Patent Application Laid-Open No. Sho 63-216858 and Japanese Patent Application Laid-Open No. Hei 3-130253. An object of the invention disclosed in Japanese Patent Application Laid-Open No. Hei 1-131144 is to provide a liquid crystal compound having a low viscosity, a wide nematic phase, an excellent low temperature compatibility and a large dielectric constant anisotropy. However, the composition disclosed in the above application has a low clearing point and a large temperature dependency of the threshold voltage, and therefore it is unsatisfactory as a liquid crystal material for an LCD used outdoors.

An object of the invention disclosed in Japanese Patent Application Laid-Open No. Sho 63-216858 is to provide a liquid crystal compound having a low viscosity, a high clearing point and a large dielectric constant anisotropy. However, the composition disclosed in the above application has a high threshold voltage and a low clearing point, and therefore it is unsatisfactory as a liquid crystal material for an LCD used outdoors.

An object of the invention disclosed in Japanese Patent Application Laid-Open No. Hei 3-130253 is to provide a liquid crystal compound having a large refractive index anisotropy and a high dielectric constant anisotropy. However, the composition disclosed in the above application has a low clearing point and a large temperature dependency of the threshold voltage, and therefore it is still unsatisfactory as a liquid crystal material for an LCD used outdoors.

Thus, while liquid crystal materials have intensively been investigated, few compositions suited to use in an LCD of the STN mode used outdoors are available as described above.

SUMMARY OF THE INVENTION

An object of the present invention is to provide a liquid crystal composition which has (1) a high clearing point, (2) a low threshold voltage and (3) a small temperature dependency of the threshold voltage and which (4) is less liable to be deteriorated by heat and UV rays, particularly a liquid crystal composition which can be used for an STN display element.

The present inventors have intensively investigated compositions using various liquid crystal compounds in order to solve these problems, and as a result thereof, they have found a liquid crystal composition which can be used for an STN display element used outdoors.

The first aspect of the present invention relates to a liquid crystal composition comprising:

(1) as a first component at least one compound selected from the group of compounds represented by the following formulae (1-1), (1-2) and (1-3):

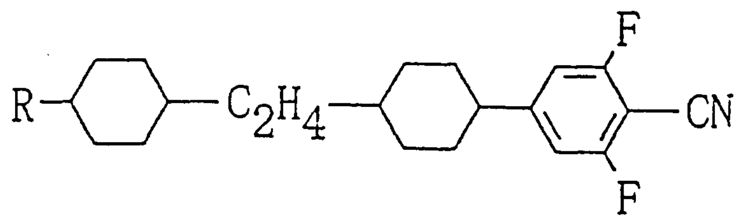

(1-1)

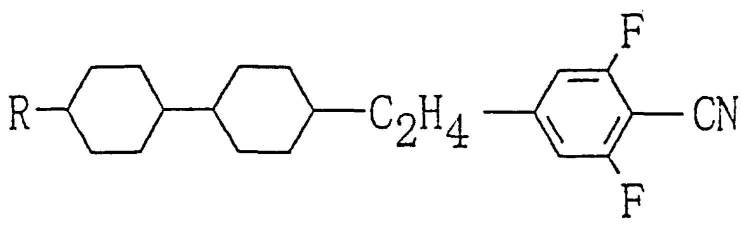

(1-2)

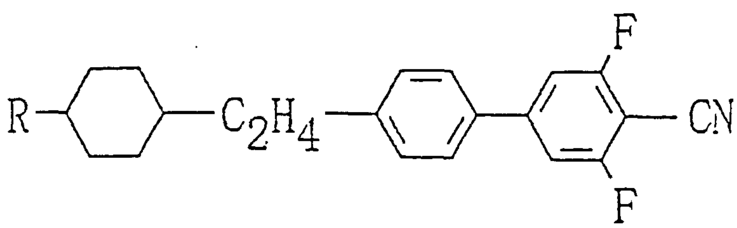

(1-3)

wherein R represents an alkyl group having 1 to 10 carbon atoms, and any hydrogen atoms in the formulae may be heavy hydrogen atoms,
(2) as a second component at least one compound selected from the group of compounds represented by the following formulae (2-1), (2-2), (2-3), (2-4) and (2-5):

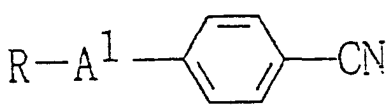

(2-1)

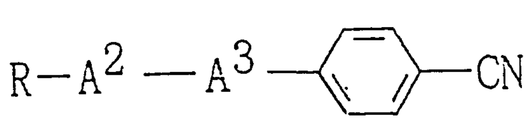

(2-2)

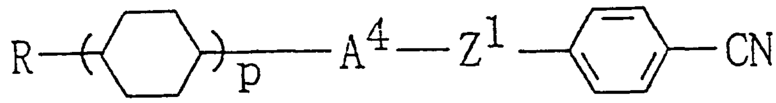

(2-3)

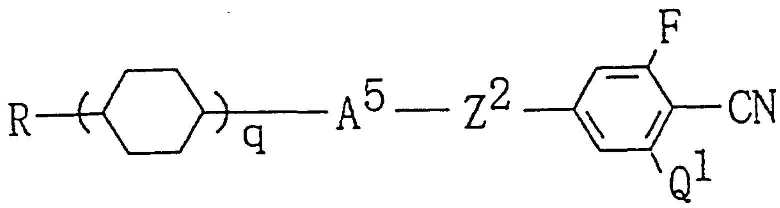

(2-4)

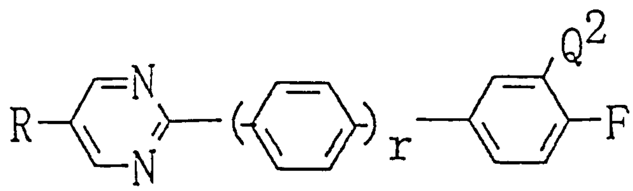

(2-5)

wherein R represents an alkyl group having 1 to 10 carbon atoms, and any one methylene group contained in the group or two or more methylene groups which are not adjacent to each other may be replaced by oxygen atoms or -CH=CH- groups, but a methylene group at the group end is not replaced by an oxygen atom; $Z^1$ represents -COO- or $-CH_2CH_2-$; $Z^2$ represents -COO- or a single bond; $Q^1$ and $Q^2$ represent independently a hydrogen atom or a fluorine atom; $A^1$ represents trans-1,4-cyclohexylene, 1, 4-phenylene, 1,3-pyrimidine-2,5-diyl or trans-1,3-dioxane-2,5-diyl; $A^2$ and $A^4$ represent independently trans-1,4-cyclohexylene or 1,4-phenylene; $A^3$ represents trans-1,4-cyclohexylene, 1,4-phenylene or pyrimidine-2,5-diyl; $A^5$ represents trans-1,4-cyclohexylene or 1,4-phenylene in which at least one hydrogen atom on the 2-, 3-, 5- and 6-positions may be substituted with a fluorine atom; p, q and r represent independently 0 or 1; and any hydrogen atoms in the formulae may be heavy hydrogen atoms, and (3) as a third component at least one compound selected from the group of compounds represented by the following formulae (3-1), (3-2) and (3-3):

$$R—B^1—Z^3—B^2—R' \quad (3\text{-}1)$$

$$R—B^3—Z^4—B^4—Z^5—B^5—R' \quad (3\text{-}2)$$

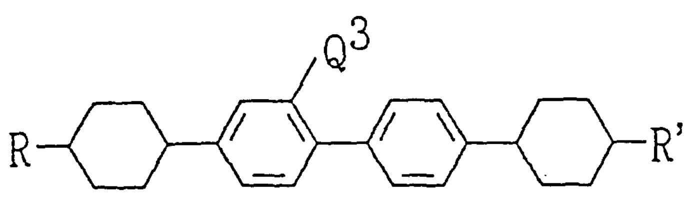

(3-3)

wherein R and R' represent independently an alkyl group having 1 to 10 carbon atoms, and any one methylene group contained in the groups or two or more methylene groups which are not adjacent to each other may be replaced by oxygen atoms or -CH=CH-groups, but a methylene group at the group end is not replaced by an oxygen atom; hydrogen atoms contained in the groups R and R' may be substituted with fluorine atoms; $B^1$ rep-

resents trans-1,4-cyclohexylene, 1,4-phenylene or 1,3-pyrimidine-2,5-diyl; $B^2$ and $B^5$ represent independently trans-1,4-cyclohexylene or 1, 4-phenylene; $B^3$ represents trans-1,4-cyclohexylene or pyrimidine-2,5-diyl; $B^4$ represents trans-1,4-cyclohexylene or 1,4-phenylene in which at least one hydrogen atom on the 2-, 3-, 5- and 6-positions may be substituted with a fluorine atom; $Z^3$ represents $-CH_2CH_2-$, -CH=CH-, -C≡C- or a single bond; $Z^4$ represents -COO-, $-CH_2CH_2-$ or a single bond; $Z^5$ represents -COO-, -CH=CH-, -C≡C- or a single bond; $Q^3$ represents a hydrogen atom or a fluorine atom; and any hydrogen atoms in the formulae may be heavy hydrogen atoms.

The embodiments of the present invention shall be shown in the following (2) to (4) items.

(2) The liquid crystal composition as described in the item (1), wherein the mixed proportions of the first, second and third components are 3 to 60 %, 3 to 55 % and 3 to 70 % respectively based on the whole amount of the liquid crystal composition.

(3) The liquid crystal composition as described in the item (1) or (2), further comprising a compound represented by the formula (4) in addition to the respective first to third components:

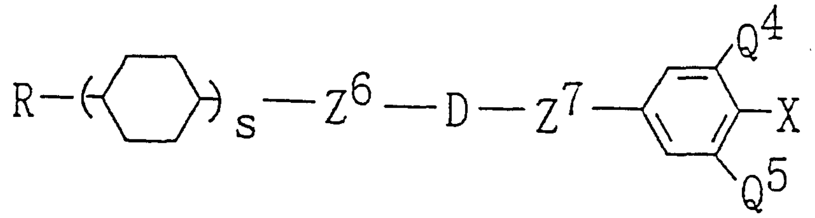

(4)

wherein R represents an alkyl group having 1 to 10 carbon atoms; D represents trans-1,4-cyclohexylene, 1,4-phenylene or trans-1,3-dioxane-2,5-diyl; $Q^4$ and $Q^5$ represent independently a hydrogen atom or a fluorine atom; $Z^6$ and $Z^7$ represent independently -COO- or a single bond; s represents 0, 1 or 2; X represents a fluorine atom or a chlorine atom; and any hydrogen atoms in the formulae may be heavy hydrogen atoms.

(4) The liquid crystal composition as described in claim 1 or 2, further comprising a compound represented by the formula (5) in addition to the respective first to third components:

$$R—E^1—COO—E^2—R' \quad (5)$$

wherein R and R' represent independently an alkyl group or alkoxy group having 1 to 10 carbon atoms; $E^1$ and $E^2$ represent independently trans-1,4-cyclohexylene or 1,4-phenylene; and any hydrogen atoms in the formulae may be heavy hydrogen atoms.

(5) The liquid crystal composition as described in the item (3), further comprising the compound represented by the formula (5) in addition to the respective first to third components and the compound represented by the formula (4):

$$R—E^1—COO—E^2—R' \quad (5)$$

wherein R and R' represent independently an alkyl group or alkoxy group having 1 to 10 carbon atoms; $E^1$ and $E^2$ represent independently trans-1,4-cyclohexylene or 1,4-phenylene; and any hydrogen atoms in the formulae may be heavy hydrogen atoms.

The second aspect of the present invention relates to:
(6) a liquid crystal display element comprising the liquid crystal composition as described in any of the items (1) to (5).

DETAILED DESCRIPTION OF THE INVENTION

The present invention shall be explained below in detail.

Most of the compounds represented by the formulae (1-1) to (1-3) which are the first components in the

present invention have a large positive dielectric constant anisotropy and almost the same rate of a change in the dielectric constant anisotropy to a change in temperatures as the rate of a change in the elastic constant to a change in temperatures. These compounds are characterized by that they are less liable to be degraded by heat and UV rays and have a high clearing point.

In the present invention, the use of the compounds represented by the formulae (1-1) to (1-3) makes it possible to lower the threshold voltage of the resulting liquid crystal composition, decrease the temperature dependency of the threshold voltage, increase the stability against heat and UV rays and thus prepare the liquid crystal composition having a high clearing point. The use of the compounds represented by the formulae (1-1) to (1-3) in large quantities in the liquid crystal composition elevates the lower limit temperature of a nematic phase in the liquid crystal composition. Accordingly, the proportion of the compounds represented by the formulae (1-1) to (1-3) contained in the liquid crystal composition is preferably 60 % or less based on the whole weight of the liquid crystal composition. In order to achieve the object of the present invention, the compounds represented by the formulae (1-1) to (1-3) are used preferably in a proportion of at least 3 % based on the whole weight of the liquid crystal composition.

More preferred blend proportion of the first component of the present invention is 10 to 30 % based on the weight of the composition.

Compounds represented by the following formulae (2-1-1) to (2-1-4) are preferably used as the compound represented by the formula (2-1) which is used for the second component in the present invention-:

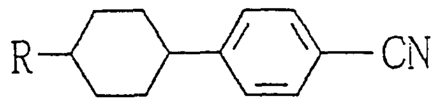
(2-1-1)

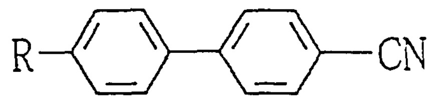
(2-1-2)

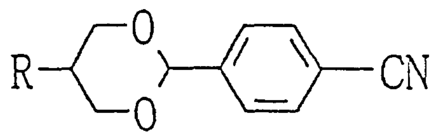
(2-1-3)

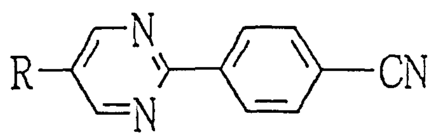
(2-1-4)

wherein R represents an alkyl group having 1 to 10 carbon atoms, and any one methylene group contained in the group or two or more methylene groups which are not adjacent to each other may be replaced by oxygen atoms or -CH=CH- groups, but a methylene group at the group end is not replaced by an oxygen atom.

Compounds represented by the following formulae (2-2-1) to (2-2 -4) are preferably used as the compound represented by the formula (2-2) which is used for the second component in the present invention:

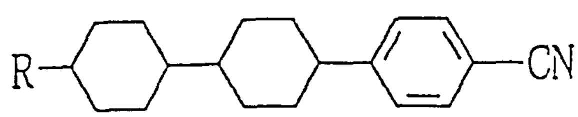
(2-2-1)

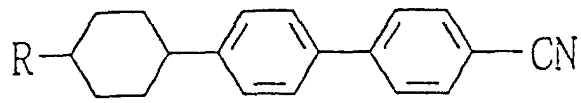

(2-2-2)

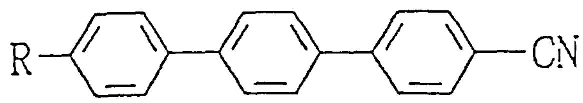

(2-2-3)

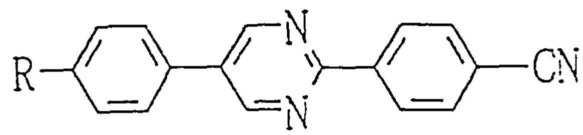

(2-2-4)

wherein R represents an alkyl group having 1 to 10 carbon atoms or an alkenyl group having 2 to 10 carbon atoms.

Compounds represented by the following formulae (2-3-1) to (2-3-4) are preferably used as the compound represented by the formula (2-3) which is used for the second component in the present invention:

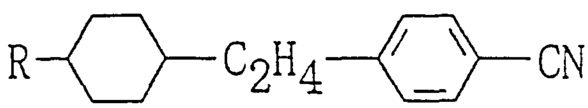

(2-3-1)

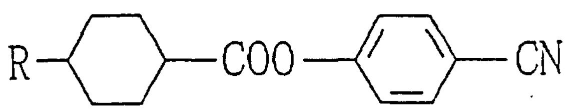

(2-3-2)

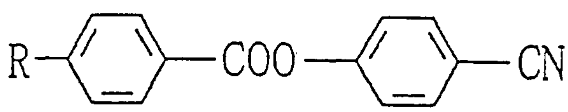

(2-3-3)

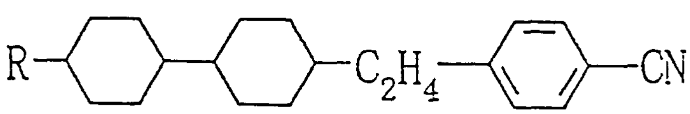

(2-3-4)

wherein R represents an alkyl group having 1 to 10 carbon atoms, and any one methylene group contained in the group or two or more methylene groups which are not adjacent to each other may be replaced by oxygen atoms or -CH=CH- groups, but a methylene group at the group end is not replaced by an oxygen atom.

Compounds represented by the following formulae (2-4-1) to (2-4-10) are preferably used as the compound represented by the formula (2-4) which is used for the second component in the present invention:

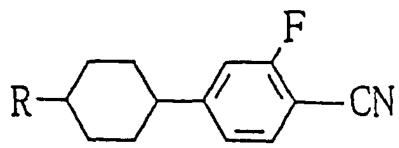

(2-4-1)

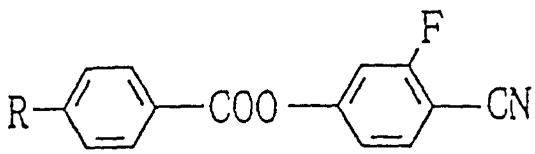

(2-4-2)

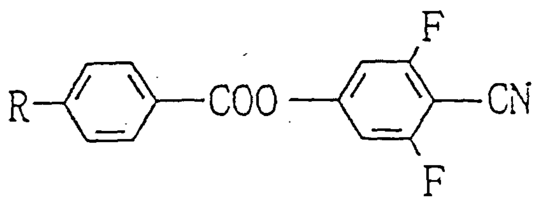

(2-4-3)

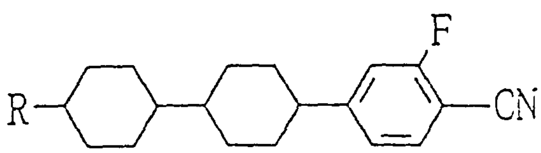

(2-4-4)

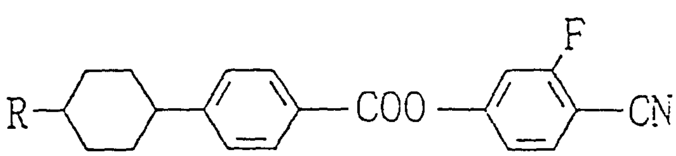

(2-4-5)

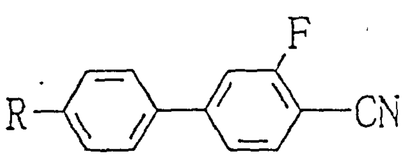

(2-4-6)

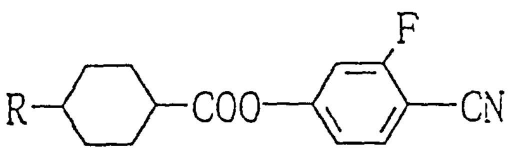

(2-4-7)

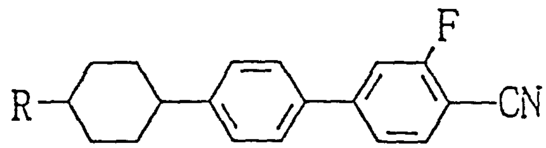

(2-4-8)

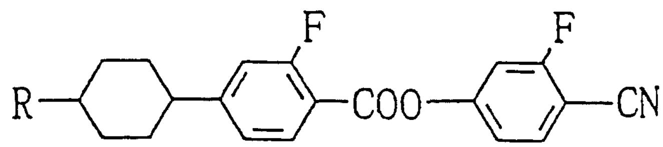

(2-4-10)

wherein R represents an alkyl group having 1 to 10 carbon atoms, and any one methylene group contained in the group or two or more methylene groups which are not adjacent to each other may be replaced by oxygen atoms or -CH=CH- groups, but a methylene group at the group end is not replaced by an oxygen atom.

Compounds represented by the following formulae (2-5-1) to (2-5-3) are preferably used as the compound represented by the formula (2-5) which is the second component in the present invention:

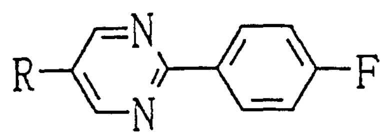

(2-5-1)

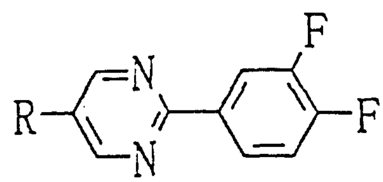

(2-5-2)

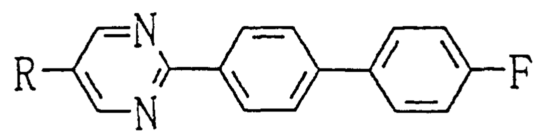

(2-5-3)

wherein R represents an alkyl group having 1 to 10 carbon atoms.

In the present invention, the compounds represented by the formulae (2-1) to (2-5) which are used for the second component are characterized by having a large dielectric constant anisotropy. The use of the compounds represented by the formulae (2-1) to (2-5) in combination with the first component makes it possible to further lower the threshold voltage of the resulting composition.

The compounds represented by the formulae (2-1) to (2-5) which are the second components in the present invention are less resistant to heat and UV rays as compared with the compounds represented by the formulae (1-1) to (1-3) which are the first component, and therefore it is concerned that blending them with the liquid crystal composition in large quantities may weaken the resulting liquid crystal composition itself against heat and UV rays. Accordingly, the proportion of the compounds represented by the formulae (2-1) to (2-5) contained in the liquid crystal composition is preferably 55 % or less based on the weight of the liquid crystal composition. Further, in order to make the threshold voltage lower, the compounds represented by the formulae (2-1) to (2-5) are blended preferably in a proportion of 3 % or more based on the whole weight of the liquid crystal composition. The blend proportion of the second component is more preferably 10 to 55 % based on the weight of the liquid crystal composition.

Compounds represented by the following formulae (3-1-1) to (3-1-7) are preferably used as the compound represented by the formula (3-1) which is the third component in the present invention:

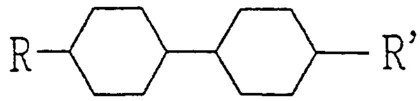
(3-1-1)

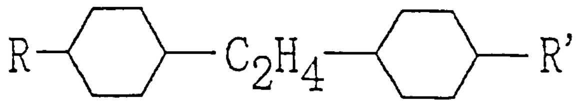
(3-1-2)

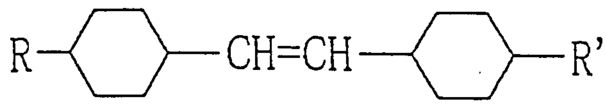
(3-1-3)

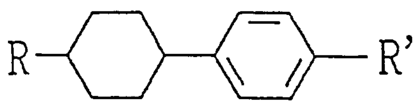
(3-1-4)

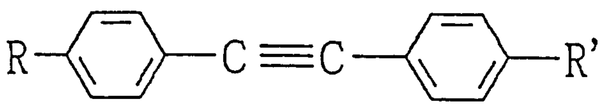
(3-1-5)

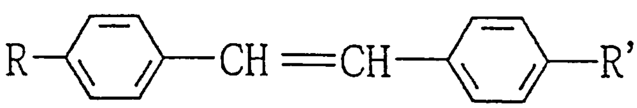
(3-1-6)

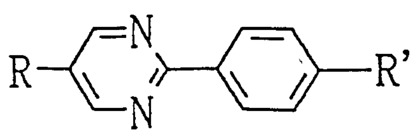
(3-1-7)

wherein R and R' represent independently an alkyl group having 1 to 10 carbon atoms, and any one methylene group contained in the group or two or more methylene groups which are not adjacent to each other may be replaced by oxygen atoms or -CH=CH- groups, but a methylene group at the group end is not replaced by an oxygen atom, and a hydrogen atom may be substituted with a fluorine atom.

Compounds represented by the following formulae (3-2-1) to (3-2-13) are preferably used as the compound represented by the formula (3-2) which is the third component in the present invention:

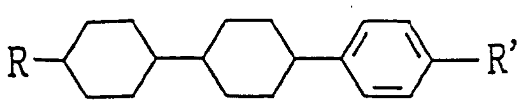
(3-2-1)

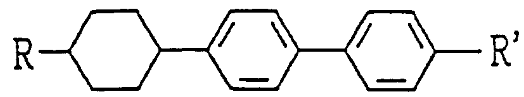

(3-2-2)

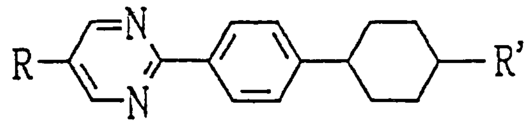

(3-2-3)

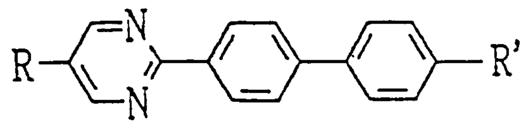

(3-2-4)

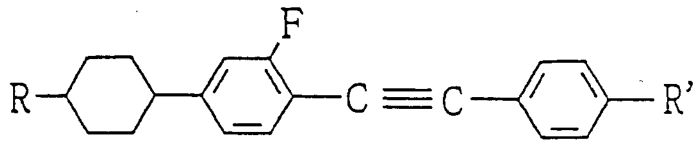

(3-2-5)

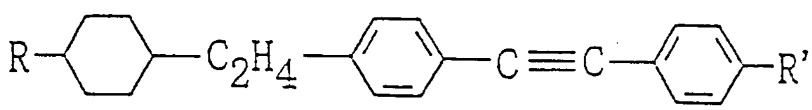

(3-2-6)

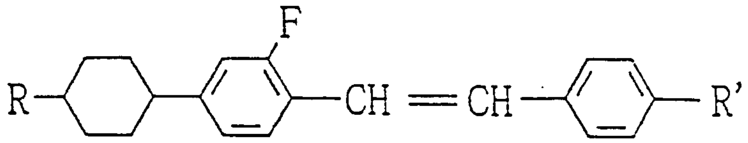

(3-2-7)

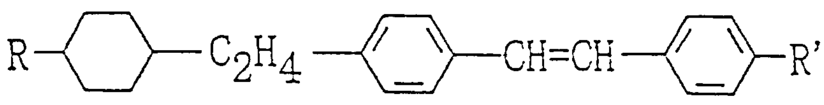

(3-2-8)

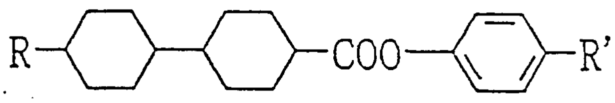

(3-2-9)

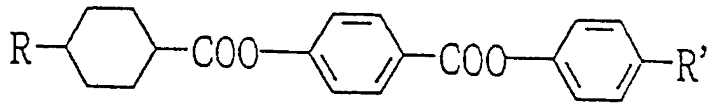

(3-2-10)

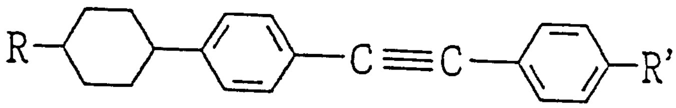

(3-2-11)

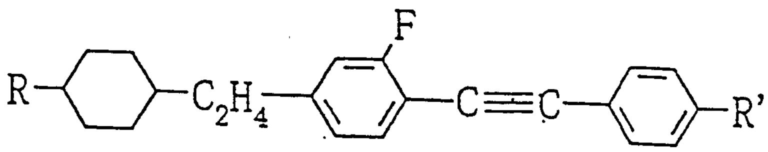

(3-2-12)

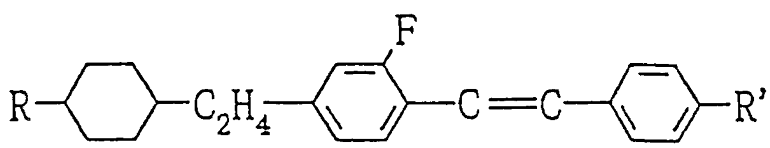

(3-2-13)

wherein R and R' represent independently an alkyl group having 1 to 10 carbon atoms, and any one methylene group contained in the group or two or more methylene groups which are not adjacent to each other may be replaced by oxygen atoms or -CH=CH- groups, but a methylene group at the group end is not replaced by an oxygen atom, and a hydrogen atom may be substituted with a fluorine atom.

A compound represented by the following formula (3-3-1) or (3-3-2) is preferably used as the compound represented by the formula (3-3) which is the third component in the present invention:

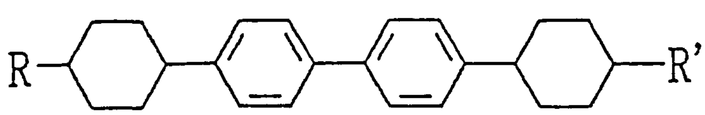

(3-3-1)

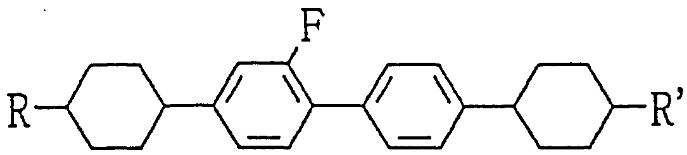

(3-3-2)

wherein R and R' represent independently an alkyl group having 1 to 10 carbon atoms, and any one methylene group contained in the group or two or more methylene groups which are not adjacent to each other may be replaced by oxygen atoms or -CH=CH- groups, but a methylene group at the group end is not replaced by an oxygen atom, and a hydrogen atom may be substituted with a fluorine atom.

The compounds represented by the formulae (3-1) to (3-3) which are the third components in the present invention are characterized by having a low viscosity. The use of these compound as the component makes it possible to lower the viscosity of the resulting liquid crystal composition. These compounds of the third component have a zero or negative value of the dielectric constant anisotropy, and therefore blending the third component with the liquid crystal composition in large quantities raises the threshold voltage of the resulting liquid crystal composition in some cases. Accordingly, the proportion of the compounds represented by the formulae (3-1) to (3-3) mixed with the liquid crystal composition is preferably 70 % or less based on the whole weight of the liquid crystal composition. Further, in order to lower the viscosity of the liquid crystal composition, the compounds represented by the formulae (3-1) to (3-3) are blended preferably in a proportion of 3 % or more based on the whole weight of the liquid crystal composition. The blend proportion of the third component is more preferably 20 to 60 % based on the weight of the composition.

Compounds represented by the following formulae (4-1) to (4-21) are preferably used as the compound represented by the formula (4) which is the fourth component in the present invention:

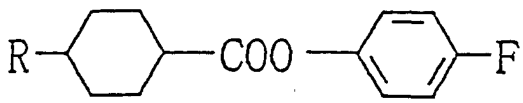

(4-1)

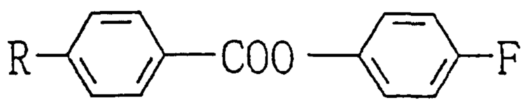

(4-2)

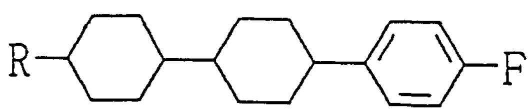

(4-3)

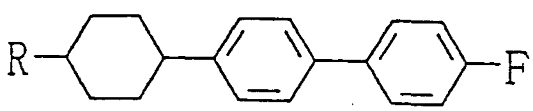

(4-4)

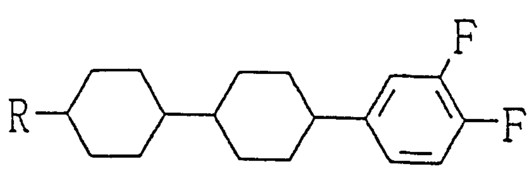

(4-5)

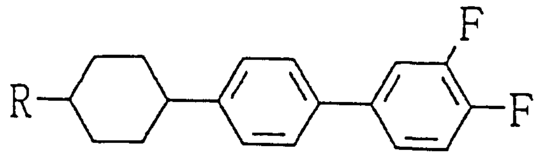

(4-6)

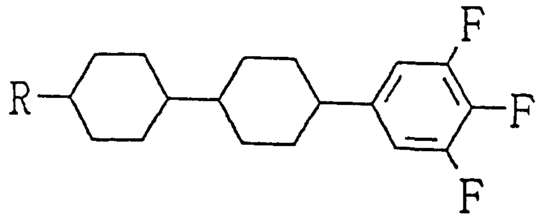

(4-7)

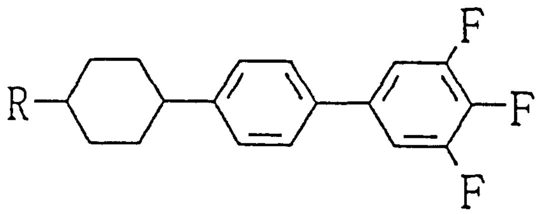

(4-8)

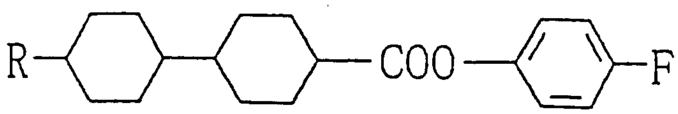

(4-9)

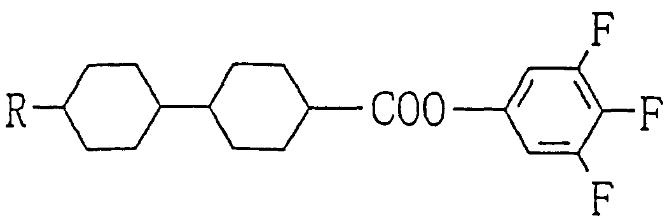

(4-10)

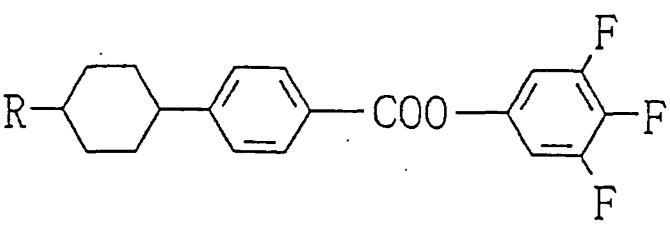

(4-11)

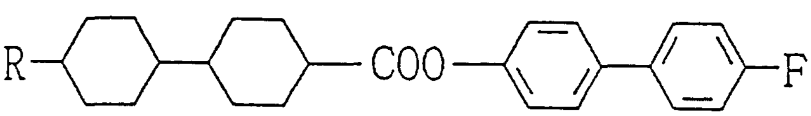

(4-12)

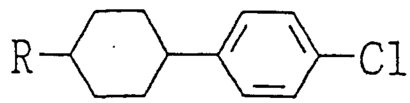

(4-13)

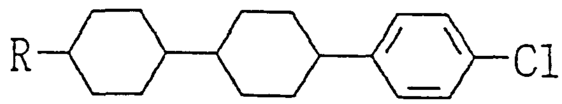

(4-14)

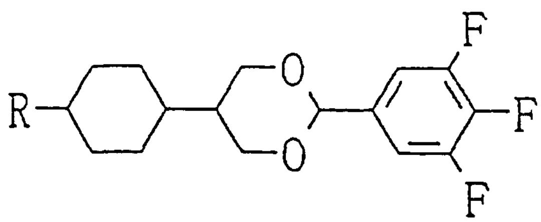

(4-15)

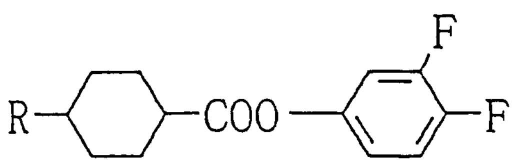

(4-16)

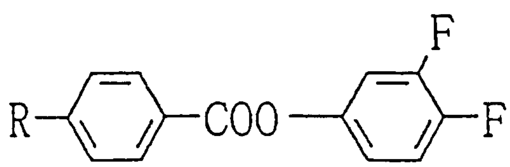

(4-17)

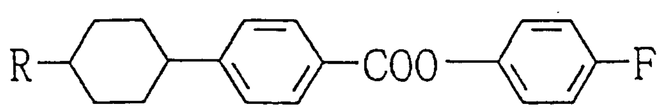

(4-18)

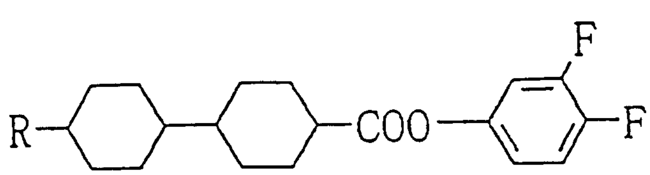

(4-19)

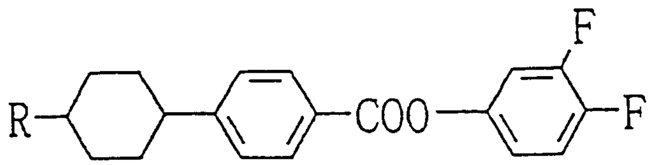

(4-20)

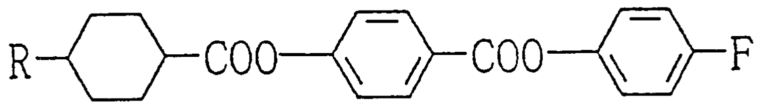

(4-21)

wherein R represents an alkyl group having 1 to 10 carbon atoms.

The compound represented by the formula (4) which is the fourth component in the present invention is used for the purpose to control the threshold voltage and the clearing point of the resulting liquid crystal composition. The compound of the present invention represented by the formula (4) has a positive dielectric constant anisotropy, but it is not so large as the dielectric constant anisotropy of the compounds of the present invention represented by the formulae (1-1) to (1-3). It is concerned that blending these compounds of the fourth component with the liquid crystal composition in large quantities may elevate the threshold voltage of the resulting liquid crystal composition. Accordingly, the proportion of the compound represented by the formula (4) blended with the liquid crystal composition is preferably 30 % or less based on the whole weight of the resulting liquid crystal composition. When the fourth component is used, more preferred blend proportion thereof is 10 to 20 % based on the weight of the composition.

A compound represented by the following formula (5-1) or (5-2) is preferably used as the compound represented by the formula (5) which is the fifth component in the present invention:

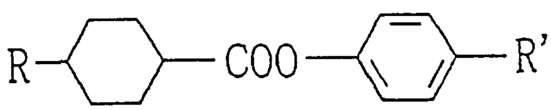

(5-1)

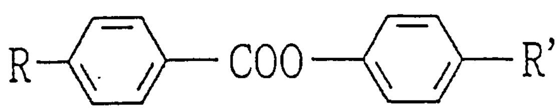

(5-2)

wherein R and R' represent independently an alkyl group or alkoxy group having 1 to 10 carbon atoms.

The compound represented by the formula (5) which is the fifth component in the present invention is used for the purpose to control the clearing point of the resulting liquid crystal composition. The compound represented by the formula (5) has an almost zero dielectric constant anisotropy, and therefore it is concerned that blending the compound represented by the formula (5) with the liquid crystal composition in large quantities may elevate the threshold voltage of the resulting liquid crystal composition. Accordingly, the proportion of the compound represented by the formulae (5) mixed with the liquid crystal composition is preferably 20 % or less based on the whole weight of the resulting liquid crystal composition. More preferred blend proportion of the fifth component is 10 to 20 % based on the weight of the composition.

The liquid crystal composition of the present invention can be prepared by conventional methods. In general, a method in which various components are dissolved and blended at higher temperatures than the clearing points thereof is used. Further, suitable additives (for example, a chiral doping agent) can be added to the liquid crystal composition of the present invention according to uses. Such additives are well known to persons skilled in the art and described in detail in publications.

Dichroic dyes such as merocyanine, styryl, azo, azomethine, azoxy, quinophthalone, anthraquinone and tetrazine bases can be added to the liquid crystal composition of the present invention for use in liquid crystal materials for

a guest host (GH) mode. Further, it can also be used as liquid crystal compositions for NCAP prepared by putting a nematic liquid crystal into microcapsules and a polymer dispersion type liquid crystal display element (PDLCD) represented by a polymer network liquid crystal display element (PNLCD) in which a three dimensional network polymer is formed in the liquid. crystal. In addition thereto, it can also be used as a liquid crystal material for a birefringence control (ECB) mode and a dynamic scattering (DS) mode.

The liquid crystal display element of the present invention is characterized by using the liquid crystal composition of the present invention described previously. One example thereof includes an STN liquid crystal element prepared by charging a cell with a liquid crystal obtained by adding a chiral dopant to the preceding liquid crystal composition of the present invention to control the spiral pitch according to a cell thickness, wherein two sheets of substrates obtained by providing transparent electrodes of ITO or the like on a set of transparent glass substrates, applying a polyimide film thereon and then rubbing are oppositely disposed so that the rubbing directions make an angle falling in a range of 180 to 270°, and spacers are provided therebetween so that a space between two substrates is about 4 to 8 μm, whereby the cell is formed.

The preferred embodiments of the present invention shall be described in the following (i) to (iv).

(i) The liquid crystal composition comprising: as the first component at least one compound of 3 to 60 % based on the weight of the composition, selected from the group of the compounds represented by the preceding formulae (1-1), (1-2) and (1-3); as the second component the compound of 10 to 51 % based on the weight of the composition, represented by any of the preceding formulae (2-1-1), (2-1-2), (2-1-3), (2-1-4), (2-2-1), (2-2-2), (2-2-3), (2-2-4), (2-3-1), (2-3-2), (2-3-3), (2-3-4), (2-4-1), (2-4-2), (2-4-3), (2-4-4), (2-4-5), (2-4-6), (2-4-7), (2-4-8), (2-4-9), (2-4-10), (2-5-1), (2-5-2) and (2-5-3); and as the third component the compound of 22 to 60 % based on the weight of the composition, represented by any of the preceding formulae (3-1-1), (3-1-2), (3-1-3), (3-1-4), (3-1-5), (3-1-6), (3-1-7), (3-2-1), (3-2-2), (3-2-3), (3-2-4), (3-2-5), (3-2-6), (3-2-7), (3-2-8), (3-2-9), (3-2-10), (3-2-11), (3-2-12), (3-2-13), (3-3-1) and (3-3-2).

(ii) The liquid crystal composition as described in the above item (i), further comprising as the fourth component the compound of 10 to 20 % based on the weight of the composition, represented by any of the preceding formulae (4-1), (4-2), (4-3), (4-4), (4-5), (4-6), (4-7), (4-8), (4-9), (4-10), (4-11), (4-12), (4-13), (4-14), (4-15), (4-16), (4-17), (4-18), (4-19), (4-20) and (4-21).

(iii) The liquid crystal composition as described in the above item (i) or (ii), further comprising as the fifth component the compound of 10 to 20 % based on the weight of the composition, represented by the preceding formula (5-1) or (5-2).

(iv) The liquid crystal display element comprising the liquid crystal composition as described in any of the preceding items (i) to (iii).

As shown in the following examples, the liquid crystal compositions characterized by having a high clearing point, a low threshold voltage, a small temperature dependency of the threshold voltage and a large stability against heat and UV rays, are provided in the present invention.

## EXAMPLES

The present invention shall be explained below in detail with reference to examples and comparative examples, but the present invention shall not be restricted to these examples. In these examples, the blend proportions of the component compounds are shown by % by weight. The compounds used in these examples are shown by codes according to a describing manner shown in Table 1.

Table 1 Manner for describing compounds with codes

$R-(A_1)-Z_1$ ------- $Z_n-(A_n)-X$

| 1) Left end group R- | Code | 3) Bond group $-Z_1-$, $-Z_n-$ | Code |
|---|---|---|---|
| $C_nH_{2n+1}-$ | n- | $-C_2H_4-$ | 2 |
| $C_nH_{2n+1}CH=CHC_mH_{2m}-$ | nVm- | $-COO-$ | E |
| $C_nH_{2n+1}OC_mH_{2m}-$ | nOm- | $-C\equiv C-$ | T |
| $CH_2=CHC_nH_{2n}-$ | Vn- | $-CH=CH-$ | V |
| $CH_2=CHC_nH_{2n}CH=CH-$ | VnV- | | |
| $C_nH_{2n+1}O-$ | nO- | | |
| $C_nH_{2n+1}OC_mH_{2m}O-$ | nOmO- | | |
| $CH_2=CH-$ | V- | | |
| $F_2C=CH-$ | VFF- | | |

| 2) Cyclic structure $-(A_1)-$, $-(A_n)-$ | Code | 4) Right end group -X | Code |
|---|---|---|---|
| 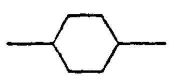 | H | $-CN$ | -C |
| | | $-OC_nH_{2n+1}$ | -On |
| 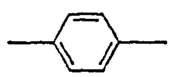 | B | $-F$ | -F |
| | | $-C_nH_{2n+1}$ | -n |
| 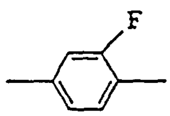 | B(F) | $-CH=CF_2$ | -VFF |
| | | $-C_nH_{2n}CH=CF_2$ | -nVFF |
| | | $-Cl$ | -CL |
| 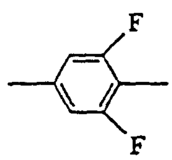 | B(F,F) | $-OC_nH_{2n}OC_mH_{2m+1}$ | -OnOm |
| 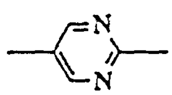 | Py | | |
| 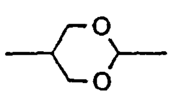 | D | | |

5) Description examples

Example 1 3-H2B(F,F)B(F)-F

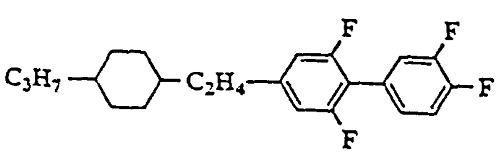

Example 2 1V2-BEB(F,F)-C

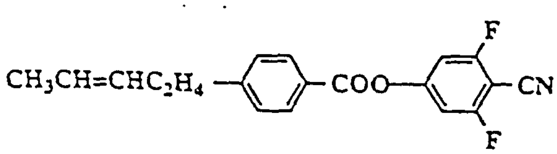

In these examples, the viscosity is a value at 20°C, and the refractive index anisotropy and the threshold voltage show values determined at 25°C. The refractive index anisotropy is a value determined at a wavelength of 589 nm.

A temperature dependency (δ) of the threshold voltage is defined by an equation (A) shown below. It is meant that the smaller the value of δ in the equation (A) is, the smaller the temperature dependency of the threshold voltage is.

$$\delta\ (V/^\circ C) = \frac{V_{20}\ (V) - V_{50}\ (V)}{50\ (^\circ C) - 20\ (^\circ C)} \qquad (A)$$

In the equation (A), $V_{50}$ and $V_{20}$ show the threshold voltages at 50°C and 20°C, respectively.

Stability against heat and stability against UV rays were determined according to the following test methods and each defined by differences dH and dUV between the current values before and after the tests.

That is, transparent electrodes of 1 $cm^2$ which are provided on glass substrates and on which silicon dioxide is obliquely deposited are oppositely disposed to form a TN cell having a cell gap of 10 μm, and this is charged with a sample to prepare a test cell. A rectangular wave of 3 V and 32 Hz is applied between the electrodes of this test cell to determine an initial current value Ihb, and then after leaving for standing the above cell at 150°C for one hour in an air oven, the same voltage is applied to the test cell to measure a current value Iha after heating.

The stability against UV rays is determined with a test cell prepared in the same manner as described above, wherein an initial current value Iuvb is determined, and then the test cell is irradiated with a UV ray lump for 20 minutes at an irradiation intensity of a cell surface controlled to 12 $mW/cm^2$, followed by measuring a current value Iuva after irradiation.

The stabilities dH and dUV against heat and UV rays are defined by the following equations (B) and (C), respectively:

$$dH\ (\mu A) = Iha\ (\mu A) - Ihb\ (\mu A) \qquad (B)$$

$$dUV\ (\mu A) = Iuva\ (\mu A) - Iuvb\ (\mu A) \qquad (C)$$

It is meant that the smaller the value of dH in the equation (B) is, the more resistant to heat the composition is and that the smaller the value of dUV in the equation (C) is, the more resistant to UV rays the composition is.

Comparative Example 1

The following composition disclosed in Japanese Patent Application Laid-Open No. Hei 1-131144 was prepared.

| | |
|---|---|
| First component of the present invention | |
| 2-H2HB(F, F)-C | 15.0 % [refer to (1-1)] |
| Second component of the present invention | |
| 3-HB-C | 25.5 % [refer to (2-1-1)] |
| 5-HB-C | 34.0 % [refer to (2-1-1)] |
| 7-HB-C | 25.5 % [refer to (2-1-1)] |

This composition had a clearing point of 56.7°C, a viscosity of 26.4 mPa·s, a refractive index anisotropy of 0.114 and a threshold voltage of 1.36 V. Further, the composition had a temperature dependency δ of the threshold voltage of 0.017, a heat stability dH of 0.20 and a UV ray stability dUV of 0.04.

Comparative Example 2

The following composition disclosed in Japanese Patent Application Laid-Open No. Hei 1-131144 was prepared.

| First component of the present invention | |
|---|---|
| 2-HH2B(F, F)-C | 15.0 % [refer to (1-2)] |
| Second component of the present invention | |
| 3-HB-C<br>5-HB-C<br>7-HB-C | 25.5 % [refer to (2-1-1)]<br>34.0 % [refer to (2-1-1)]<br>25.5 % [refer to (2-1-1)] |

This composition had a clearing point of 62.2°C, a viscosity of 26.5 mPa·s, a refractive index anisotropy of 0.117 and a threshold voltage of 1.38 V. Further, the composition had a δ of 0.013, a dH of 0.20 and a dUV of 0.03.

Comparative Example 3

The following composition disclosed in Japanese Patent Application Laid-Open No. Sho 63-216858 was prepared.

| First component of the present invention | |
|---|---|
| 3-H2HB(F, F)-C | 10.00 % [refer to (1-1)] |
| Fifth component of the present invention | |
| 3-HEB-O4<br>4-HEB-O2<br>5-HEB-O1 | 24.03 % [refer to (5-1)]<br>24.03 % [refer to (5-1)]<br>23.94 % [refer to (5-1)] |
| Second component of the present invention | |
| 2-BEB-C<br>3-BEB-C | 13.50 % [refer to (2-3-3)]<br>4.50 % [refer to (2-3-3)] |

This composition had a clearing point of 65.9°C, a viscosity of 25.9 mPa·s, a refractive index anisotropy of 0.089 and a threshold voltage of 1.69 V. Further, the composition had a δ of 0.015, a dH of 0.55 and a dUV of 2.44.

Comparative Example 4

The following composition disclosed in Japanese Patent Application Laid-Open No. Hei 3-130253 was prepared.

| First component of the present invention | |
|---|---|
| 4-H2BB(F, F)-C | 15.0 % [refer to (1-3)] |
| Second component of the present invention | |
| 3-HB-C<br>5-HB-C<br>7-HB-C | 25.5 % [refer to (2-1-1)]<br>34.0 % [refer to (2-1-1)]<br>25.5 % [refer to (2-1-1)] |

This composition had a clearing point of 56.7°C, a viscosity of 30.1 mPa·s, a refractive index anisotropy of 0.128 and a threshold voltage of 1.42 V. Further, the composition had a δ of 0.018, a dH of 0.22 and a dUV of 0.02.

Example 1

The following composition comprising the respective first, second and third components was prepared.

| First component | |
|---|---|
| 2-H2BB(F, F)-C | 7.0 % [refer to (1-3)] |

(continued)

| First component | |
|---|---|
| 3-H2BB(F, F)-C | 5.0 % [refer to (1-3)] |
| 4-H2BB(F, F)-C | 5.0 % [refer to (1-3)] |
| 5-H2BB(F, F)-C | 5.0 % [refer to (1-3)] |
| Second component | |
| 2-HB(F)-C | 13.0 % [refer to (2-4-1)] |
| 3-HB(F)-C | 12.0 % [refer to (2-4-1)] |
| 3-PyBB-F | 6.0 % [refer to (2-5-3)] |
| 4-PyBB-F | 5.0 % [refer to (2-5-3)] |
| Third component | |
| 3-HH-4 | 10.0 % [refer to (3-1-1)] |
| 3-HHB-1 | 10.0 % [refer to (3-2-1)] |
| 3-H2BTB-2 | 4.0 % [refer to (3-2-6)] |
| 3-H2BTB-3 | 4.0 % [refer to (3-2-6)] |
| 3-H2BTB-4 | 4.0 % [refer to (3-2-6)] |
| 3-HB(F)TB-2 | 5.0 % [refer to (3-2-5)] |
| 3-HB(F)TB-3 | 5.0 % [refer to (3-2-5)] |

This composition had a clearing point of 87.8°C, a viscosity of 38.5 mPa·s, a refractive index anisotropy of 0.159 and a threshold voltage of 1.27 V. Further, the composition had a temperature dependency δ of the threshold voltage of 0.005, a heat stability dH of 0.02 and a UV ray stability dUV of 0.01.

Example 2

The following composition comprising the respective first, second and third components was prepared.

| First component | |
|---|---|
| 2-H2HB(F, F)-C | 5.0 % [refer to (1-1)] |
| 3-H2HB(F, F)-C | 5.0 % [refer to (1-1)] |
| 4-H2HB(F, F)-C | 5.0 % [refer to (1-1)] |
| 5-H2HB(F, F)-C | 5.0 % [refer to (1-1)] |
| Second component | |
| 1V2-BEB(F, F)-C | 6.0 % [refer to (2-4-3)] |
| 3-HB-C | 14.0 % [refer to (2-1-1)] |
| Third component | |
| 2-BTB-1 | 12.0 % [refer to (3-1-5)] |
| 5-HH-VFF | 20.0 % [refer to (3-1-1)] |
| 1-BHH-VFF | 15.0 % [refer to (3-2-1)] |
| 3-HHB-1 | 6.0 % [refer to (3-2-1)] |
| 3-H2BTB-2 | 4.0 % [refer to (3-2-6)] |
| 3-H2BTB-3 | 3.0 % [refer to (3-2-6)] |

This composition had a clearing point of 88.6°C, a viscosity of 28.0 mPa·s, a refractive index anisotropy of 0.128 and a threshold voltage of 1.35 V. Further, the composition had a δ of 0.003, a dH of 0.03 and a dUV of 0.02.

Example 3

The following composition comprising the respective first, second and third components was prepared.

| First component | |
|---|---|
| 2-HH2B(F, F)-C | 5.0 % [refer to (1-2)] |
| 3-HH2B(F, F)-C | 5.0 % [refer to (1-2)] |
| 4-HH2B(F, F)-C | 5.0 % [refer to (1-2)] |
| 5-HH2B(F, F)-C | 5.0 % [refer to (1-2)] |
| Second component | |
| 301-BEB(F)-C | 6.0 % [refer to (2-4-2)] |
| 3-DB-C | 7.0 % [refer to (2-1-3)] |
| 4-DB-C | 7.0 % [refer to (2-1-3)] |
| 2-BB-C | 6.0 % [refer to (2-1-2)] |
| 4-BB-C | 6.0 % [refer to (2-1-2)] |
| Third component | |
| 3-HB-O2 | 20.0 % [refer to (3-1-4)] |
| 3-HHB-3 | 10.0 % [refer to (3-2-1)] |
| 3-HHB-O1 | 5.0 % [refer to (3-2-1)] |
| 3-HHB-1 | 6.0 % [refer to (3-2-1)] |
| 3-HB(F)TB-2 | 4.0 % [refer to (3-2-5)] |
| 3-HB(F)TB-3 | 3.0 % [refer to (3-2-5)] |

This composition had a clearing point of 83.5°C, a viscosity of 32.2 mPa·s, a refractive index anisotropy of 0.128 and a threshold voltage of 1.30 V. Further, the composition had a δ of 0.005, a dH of 0.02 and a dUV of 0.02.

Example 4

The following composition was prepared.

| First component | |
|---|---|
| 2-H2BB(F, F)-C | 5.0 % [refer to (1-3)] |
| 3-H2BB(F, F)-C | 5.0 % [refer to (1-3)] |
| 2-H2HB(F, F)-C | 5.0 % [refer to (1-1)] |
| 3-H2HB(F, F)-C | 5.0 % [refer to (1-1)] |
| 2-HH2B(F, F)-C | 5.0 % [refer to (1-2)] |
| 3-HH2B(F, F)-C | 5.0 % [refer to (1-2)] |
| Second component | |
| V2-HB-C | 10.0 % [refer to (2-1-1)] |
| 1V2-HB-C | 10.0 % [refer to (2-1-1)] |
| 2-BEB-C | 8.0 % [refer to (2-3-3)] |
| 2-HHB-C | 6.0 % [refer to (2-2-1)] |
| 3-HHB(F)-C | 6.0 % [refer to (2-4-4)] |
| Third component | |
| 3-HB-O2 | 12.0 % [refer to (3-1-4)] |
| 3-HB-O4 | 6.0 % [refer to (3-1-4)] |
| 1O1-HH-3 | 6.0 % [refer to (3-1-1)] |
| 1O1-HH-5 | 6.0 % [refer to (3-1-1)] |

This composition had a clearing point of 84.9°C, a viscosity of 35.1 mPa·s, a refractive index anisotropy of 0.114 and a threshold voltage of 1.20 V. Further, the composition had a δ of 0.006, a dH of 0.03 and a dUV of 0.02.

Example 5

The following liquid crystal composition was prepared.

| First component | |
|---|---|
| 2-H2BB(F, F)-C | 7.0 % [refer to (1-3)] |
| 3-H2BB(F, F)-C | 5.0 % [refer to (1-3)] |
| 2-H2HB(F, F)-C | 5.0 % [refer to (1-1)] |
| 3-H2HB(F, F)-C | 5.0 % [refer to (1-1)] |
| Second component | |
| 5-PyB(F)-F | 7.0 % [refer to (2-5-2)] |
| 5-PyB -F | 6.0 % [refer to (2-5-1)] |
| 2-BEB-C | 6.0 % [refer to (2-3-3)] |
| 3-HB(F)-C | 6.0 % [refer to (2-4-1)] |
| 3-PyBB-F | 6.0 % [refer to (2-5-3)] |
| 4-PyBB-F | 5.0 % [refer to (2-5-3)] |
| Third component | |
| 3-HH-4 | 10.0 % [refer to (3-1-1)] |
| 3-HHB-1 | 10.0 % [refer to (3-2-1)] |
| 3-H2BTB-2 | 4.0 % [refer to (3-2-6)] |
| 3-H2BTB-3 | 4.0 % [refer to (3-2-6)] |
| 3-H2BTB-4 | 4.0 % [refer to (3-2-6)] |
| 3-HB(F)TB-2 | 5.0 % [refer to (3-2-5)] |
| 3-HB(F)TB-3 | 5.0 % [refer to (3-2-5)] |

This composition had a clearing point of 91.5°C, a viscosity of 33.9 mPa·s, a refractive index anisotropy of 0.160 and a threshold voltage of 1.29 V. Further, the composition had a δ of 0.006, a dH of 0.03 and a dUV of 0.03.

Example 6

The following liquid crystal composition was prepared.

| First component | |
|---|---|
| 2-H2BB(F, F)-C | 5.0 % [refer to (1-3)] |
| 3-H2BB(F, F)-C | 5.0 % [refer to (1-3)] |
| 2-HH2B(F, F)-C | 5.0 % [refer to (1-2)] |
| 3-HH2B(F, F)-C | 5.0 % [refer to (1-2)] |
| Second component | |
| 1V2-BEB(F, F)-C | 6.0 % [refer to (2-4-3)] |
| 1O1-HB-C | 4.0 % [refer to (2-1-1)] |
| 3-HB-C | 10.0 % [refer to (2-1-1)] |
| Third component | |
| 2-BTB-O1 | 6.0 % [refer to (3-1-5)] |
| 2-BTB-1 | 6.0 % [refer to (3-1-5)] |
| 5-HH-VFF | 20.0 % [refer to (3-1-1)] |
| 1-BHH-2VFF | 5.0 % [refer to (3-2-1)] |
| 1-BHH-VFF | 7.0 % [refer to (3-2-1)] |
| 3-HHB-1 | 6.0 % [refer to (3-2-1)] |
| 3-PyBH-2 | 4.0 % [refer to (3-2-3)] |
| 4-PyBB-2 | 3.0 % [refer to (3-2-4)] |

(continued)

| | |
|---|---|
| Third component | |
| 1-BBH-VFF | 3.0 % [refer to (3-2-2)] |

This composition had a clearing point of 92.5°C, a viscosity of 38.9 mPa·s, a refractive index anisotropy of 0.161 and a threshold voltage of 1.25 V. Further, the composition had a δ of 0.004, a dH of 0.02 and a dUV of 0.01.

Example 7

The following liquid crystal composition was prepared.

| | |
|---|---|
| First component | |
| 2-H2HB(F, F)-C | 5.0 % [refer to (1-1)] |
| 3-H2HB(F, F)-C | 5.0 % [refer to (1-1)] |
| 2-HH2B(F, F)-C | 5.0 % [refer to (1-2)] |
| 3-HH2B(F, F)-C | 5.0 % [refer to (1-2)] |
| Second component | |
| 1V2-BEB(F, F)-C | 6.0 % [refer to (2-4-3)] |
| 5-PyB-C | 4.0 % [refer to (2-1-4)] |
| 3-HB-C | 10.0 % [refer to (2-1-1)] |
| Third component | |
| 2-BTB-1 | 12.0 % [refer to (3-1-5)] |
| V2V-HH-3 | 3.0 % [refer to (3-1-1)] |
| 5-HH-VFF | 17.0 % [refer to (3-1-1)] |
| V2V-HHB-1 | 3.0 % [refer to (3-2-1)] |
| 1-BHH-VFF | 12.0 % [refer to (3-2-1)] |
| 3-HHB-1 | 6.0 % [refer to (3-2-1)] |
| 3-H2BVB-2 | 3.0 % [refer to (3-2-8)] |
| 3-HB(F)VB-2 | 4.0 % [refer to (3-2-7)] |

This composition had a clearing point of 90.8°C, a viscosity of 30.1 mPa·s, a refractive index anisotropy of 0.132 and a threshold voltage of 1.31 V. Further, the composition had a δ of 0.004, a dH of 0.01 and a dUV of 0.02.

Example 8

The following liquid crystal composition comprising the respective first, second, third and fourth components was prepared.

| | |
|---|---|
| First component | |
| 2-H2BB(F, F)-C | 4.0 % [refer to (1-3)] |
| 3-H2BB(F, F)-C | 4.0 % [refer to (1-3)] |
| Second component | |
| 2-BEB-C | 11.0 % [refer to (2-3-3)] |
| 3-BEB-C | 3.0 % [refer to (2-3-3)] |
| 2-HB(F)-C | 13.0 % [refer to (2-4-1)]. |
| 3-HB(F)-C | 12.0 % [refer to (2-4-1)] |
| 5-HBB-C | 6.0 % [refer to (2-2-2)] |
| 5-BBB-C | 5.0 % [refer to (2-2-3)] |

(continued)

| Third component | |
|---|---|
| 3-HH-4 | 7.0 % [refer to (3-1-1)] |
| 3-HVH-2 | 3.0 % [refer to (3-1-3)] |
| 3-H2BTB-2 | 4.0 % [refer to (3-2-6)] |
| 3-H2BTB-3 | 4.0 % [refer to (3-2-6)] |
| 3-H2BTB-4 | 4.0 % [refer to (3-2-6)] |
| 3-HB(F)TB-2 | 5.0 % [refer to (3-2-5)] |
| 3-HB(F)TB-3 | 5.0 % [refer to (3-2-5)] |
| Fourth component | |
| 3-HHB-F | 3.0 % [refer to (4-3)] |
| 3-HHB(F)-F | 3.0 % [refer to (4-5)] |
| 3-HHB(F, F)-F | 4.0 % [refer to (4-7)] |

This composition had a clearing point of 85.7°C, a viscosity of 33.7 mPa·s, a refractive index anisotropy of 0.166 and a threshold voltage of 1.23 V. Further, the composition had a δ of 0.006, a dH of 0.01 and a dUV of 0.03.

Example 9

The following liquid crystal composition comprising the respective first, second, third and fourth components was prepared.

| First component | |
|---|---|
| 2-H2HB(F, F)-C | 5.0 % [refer to (1-1)] |
| 3-H2HB(F, F)-C | 5.0 % [refer to (1-1)] |
| 4-H2HB(F, F)-C | 5.0 % [refer to (1-1)] |
| Second component | |
| 2-HB(F)-C | 13.0 % [refer to (2-4-1)] |
| 3-HB(F)-C | 12.0 % [refer to (2-4-1)] |
| 301-HBEB(F)-C | 7.0 % [refer to (2-4-5)] |
| 3-HB(F)EB(F)-C | 6.0 % [refer to (2-4-10)] |
| 4-PyBB-F | 5.0 % [refer to (2-5-3)] |
| Third component | |
| 3-PyB-2 | 6.0 % [refer to (3-1-7)] |
| 3-PyB-O2 | 5.0 % [refer to (3-1-7)] |
| 1O1-HBBH-4 | 6.0 % [refer to (3-3-1)] |
| 1O1-HBBH-5 | 5.0 % [refer to (3-3-1)] |
| Fourth component | |
| 3-HHEB-F | 4.0 % [refer to (4-9)] |
| 3-HHEB(F, F)-F | 4.0 % [refer to (4-10)] |
| 3-HBB-F | 4.0 % [refer to (4-4)] |
| 3-HBB(F)-F | 4.0 % [refer to (4-6)] |
| 3-HBB(F, F)-F | 4.0 % [refer to (4-8)] |

This composition had a clearing point of 85.6°C, a viscosity of 49.5 mPa·s, a refractive index anisotropy of 0.129 and a threshold voltage of 1.20 V. Further, the composition had a δ of 0.006, a dH of 0.03 and a dUV of 0.02.

Example 10

The following liquid crystal composition comprising the respective first, second, third, fourth and fifth components was prepared.

| | |
|---|---|
| First component | |
| 2-HH2B(F, F)-C | 5.0 % [refer to (1-2)] |
| 3-HH2B(F, F)-C | 5.0 % [refer to (1-2)] |
| 4-HH2B(F, F)-C | 5.0 % [refer to (1-2)] |
| 5-HH2B(F, F)-C | 5.0 % [refer to (1-2)] |
| Second component | |
| 301-BEB(F)-C | 6.0 % [refer to (2-4-2)] |
| 3-DB-C | 7.0 % [refer to (2-1-3)] |
| 4-DB-C | 7.0 % [refer to (2-1-3)] |
| 2-BB-C | 6.0 % [refer to (2-1-2)] |
| 4-BB-C | 6.0 % [refer to (2-1-2)] |
| Third component | |
| 3-HHB-3 | 10.0 % [refer to (3-2-1)] |
| 3-HHB-1 | 6.0 % [refer to (3-2-1)] |
| 3-HB(F)TB-2 | 4.0 % [refer to (3-2-5)] |
| 3-HB(F)TB-3 | 3.0 % [refer to (3-2-5)] |
| Fourth component | |
| 7-HEB-F | 5.0 % [refer to (4-1)] |
| 3-HHB-CL | 5.0 % [refer to (4-14)] |
| Fifth component | |
| 3-HEB-O2 | 5.0 % [refer to (5-1)] |
| 4-HEB-3 | 5.0 % [refer to (5-1)] |
| 1O-BEB-2 | 5.0 % [refer to (5-2)] |

This composition had a clearing point of 85.4°C, a viscosity of 49.3 mPa·s, a refractive index anisotropy of 0.134 and a threshold voltage of 1.31 V. Further, the composition had a δ of 0.005, a dH of 0.02 and a dUV of 0.03.

Example 11

The following liquid crystal composition comprising the respective first, second, third and fourth components was prepared.

| | |
|---|---|
| First component | |
| 2-H2BB(F, F)-C | 7.0 % [refer to (1-3)] |
| 3-H2BB(F, F)-C | 5.0 % [refer to (1-3)] |
| 4-H2BB(F, F)-C | 5.0 % [refer to (1-3)] |
| 5-H2BB(F, F)-C | 5.0 % [refer to (1-3)] |
| Second component | |
| 2-HB(F)-C | 13.0 % [refer to (2-4-1)] |
| 3-HB(F)-C | 12.0 % [refer to (2-4-1)] |
| 3-PyBB-F | 6.0 % [refer to (2-5-3)] |
| 4-PyBB-F | 5.0 % [refer to (2-5-3)] |
| Third component | |
| 3-HHB-1 | 10.0 % [refer to (3-2-1)] |

| | |
|---|---|
| 3-H2BTB-2 | 4.0 % [refer to (3-2-6)] |
| 3-H2BTB-3 | 4.0 % [refer to (3-2-6)] |
| 3-H2BTB-4 | 4.0 % [refer to (3-2-6)] |

(continued)

| Third component | |
|---|---|
| 3-HB(F)TB-2 | 5.0 % [refer to (3-2-5)] |
| Fourth component | |
| 5-HB-CL | 5.0 % [refer to (4-13)] |
| 3-HHEBB-F | 5.0 % [refer to (4-12)] |
| 3-HBEB(F, F)-F | 5.0 % [refer to (4-11)] |

This composition had a clearing point of 90.2°C, a viscosity of 45.9 mPa·s, a refractive index anisotropy of 0.161 and a threshold voltage of 1.25 V. Further, the composition had a δ of 0.006, a dH of 0.02 and a dUV of 0.02.

Example 12

The following composition comprising the respective first, second and third components was prepared.

| First component | |
|---|---|
| 2-H2BB(F, F)-C | 5.0 % [refer to (1-3)] |
| 3-H2BB(F, F)-C | 5.0 % [refer to (1-3)] |
| 4-H2BB(F, F)-C | 5.0 % [refer to (1-3)] |
| 5-H2BB(F, F)-C | 5.0 % [refer to (1-3)] |
| 2-H2HB(F, F)-C | 5.0 % [refer to (1-1)] |
| 3-H2HB(F, F)-C | 5.0 % [refer to (1-1)] |
| 4-H2HB(F, F)-C | 5.0 % [refer to (1-1)] |
| 5-H2HB(F, F)-C | 5.0 % [refer to (1-1)] |
| 2-HH2B(F, F)-C | 5.0 % [refer to (1-2)] |
| 3-HH2B(F, F)-C | 5.0 % [refer to (1-2)] |
| 4-HH2B(F, F)-C | 5.0 % [refer to (1-2)] |
| 5-HH2B(F, F)-C | 5.0 % [refer to (1-2)] |
| Second component | |
| 2-HHB-C | 4.0 % [refer to (2-2-1)] |
| 3-HHB(F)-C | 6.0 % [refer to (2-4-4)] |
| Third component | |
| 3-HB-O2 | 12.0 % [refer to (3-1-4)] |
| 3-HB-O4 | 6.0 % [refer to (3-1-4)] |
| 1O1-HH-3 | 6.0 % [refer to (3-1-1)] |
| 1O1-HH-5 | 6.0 % [refer to (3-1-1)] |

This composition had a clearing point of 88.7°C, a viscosity of 49.0 mPa·s, a refractive index anisotropy of 0.103 and a threshold voltage of 1.22 V. Further, the composition had a δ of 0.004, a dH of 0.01 and a dUV of 0.01.

Example 13

The following liquid crystal composition comprising the respective first, second, third and fourth components was prepared.

| First component | |
|---|---|
| 2-H2BB(F, F)-C | 3.0 % [refer to (1-3)] |
| Second component | |
| 2-BEB-C | 11.0 % [refer to (2-3-3)] |

(continued)

| Second component | |
|---|---|
| 3-BEB-C | 3.0 % [refer to (2-3-3)] |
| 2-HB(F)-C | 13.0 % [refer to (2-4-1)] |
| 3-HB(F)-C | 12.0 % [refer to (2-4-1)] |
| 5-HBB-C | 6.0 % [refer to (2-2-2)] |
| 5-BBB-C | 5.0 % [refer to (2-2-3)] |
| Third component | |
| 3-HH-4 | 7.0 % [refer to (3-1-1)] |
| 3-HVH-2 | 3.0 % [refer to (3-1-3)] |
| 3-H2BTB-2 | 4.0 % [refer to (3-2-6)] |
| 3-H2BTB-3 | 4.0 % [refer to (3-2-6)] |
| 3-H2BTB-4 | 4.0 % [refer to (3-2-6)] |
| 3-HB(F)TB-2 | 5.0 % [refer to (3-2-5)] |
| 3-HB(F)TB-3 | 5.0 % [refer to (3-2-5)] |
| Fourth component | |
| 3-HHB-F | 3.0 % [refer to (4-3)] |
| 3-HHB(F)-F | 3.0 % [refer to (4-5)] |
| 3-HHB(F, F)-F | 4.0 % [refer to (4-7)] |
| 3-HBEB(F, F)-F | 5.0 % [refer to (4-11)] |

This composition had a clearing point of 86.3°C, a viscosity of 32.1 mPa·s, a refractive index anisotropy of 0.164 and a threshold voltage of 1.22 V. Further, the composition had a δ of 0.006, a dH of 0.01 and a dUV of 0.02.

Example 14

The following liquid crystal composition comprising the respective first, second, third and fourth components was prepared.

| First component | |
|---|---|
| 2-H2BB(F, F)-C | 4.0 % [refer to (1-3)] |
| 3-H2BB(F, F)-C | 4.0 % [refer to (1-3)] |
| Second component | |
| 2-BEB-C | 11.0 % [refer to (2-3-3)] |
| 3-BEB-C | 3.0 % [refer to (2-3-3)] |
| 2-HB(F)-C | 13.0 % [refer to (2-4-1)] |
| 3-HB(F)-C | 12.0 % [refer to (2-4-1)] |
| 5-HBB-C | 6.0 % [refer to (2-2-2)] |
| 5-BBB-C | 5.0 % [refer to (2-2-3)] |
| Third component | |
| 3-HH-4 | 7.0 % [refer to (3-1-1)] |
| 3-HVH-2 | 3.0 % [refer to (3-1-3)] |
| 3-H2BTB-2 | 4.0 % [refer to (3-2-6)] |
| 3-H2BTB-3 | 4.0 % [refer to (3-2-6)] |
| 3-H2BTB-4 | 4.0 % [refer to (3-2-6)] |
| 3-HB(F)TB-2 | 5.0 % [refer to (3-2-5)] |
| 3-HB(F)TB-3 | 5.0 % [refer to (3-2-5)] |

(continued)

| Fourth component | |
|---|---|
| 3-HDB(F, F)-F | 5.0 % [refer to (4-15)] |
| 4-HDB(F, F)-F | 5.0 % [refer to (4-15)] |

This composition had a clearing point of 83.1°C a viscosity of 32.1 mPa·s, a refractive index anisotropy of 0.164 and a threshold voltage of 1.20 V. Further, the composition had a δ of 0.005, a dH of 0.02 and a dUV of 0.02.

Example 15

The following liquid crystal composition comprising the respective first, second, third and fourth components was prepared.

| First component | |
|---|---|
| 2-H2BB(F, F)-C | 4.0 % [refer to (1-3)] |
| 3-H2BB(F, F)-C | 4.0 % [refer to (1-3)] |
| Second component | |
| 2-BEB-C | 8.0 % [refer to (2-3-3)] |
| 1O1O-HB-C | 3.0 % [refer to (2-1-1)] |
| 5-PyB-C | 3.0 % [refer to (2-1-4)] |
| 3-BPyB-C | 3.0 % [refer to (2-2-4)] |
| 2-HB(F)-C | 10.0 % [refer to (2-4-1)] |
| 3-HB(F)-C | 10.0 % [refer to (2-4-1)] |
| 3-BB(F)-C | 3.0 % [refer to (2-4-6)] |
| 5-HBB-C | 6.0 % [refer to (2-2-2)] |
| 5-BBB-C | 5.0 % [refer to (2-2-3)] |
| Third component | |
| 3-HH-O1 | 3.0 % [refer to (3-1-1)] |
| 3-H2H-2 | 4.0 % [refer to (3-1-2)] |
| V-HH-3 | 3.0 % [refer to (3-1-1)] |
| 3-HBTB-2 | 4.0 % [refer to (3-2-11)] |
| 3-HBTB-O2 | 4.0 % [refer to (3-2-11)] |
| 3-H2B(F)TB-2 | 4.0 % [refer to (3-2-12)] |
| 3-H2B(F)VB-2 | 3.0 % [refer to (3-2-13)] |
| 3-HB(F)TB-2 | 6.0 % [refer to (3-2-5)] |
| Fourth component | |
| 3-HDB(F, F)-F | 5.0 % [refer to (4-15)] |
| 4-HDB(F, F)-F | 5.0 % [refer to (4-15)] |

This composition had a clearing point of 84.5°C, a viscosity of 33.3 mPa·s, a refractive index anisotropy of 0.168 and a threshold voltage of 1.25 V. Further, the composition had a δ of 0.006, a dH of 0.01 and a dUV of 0.03.

Example 16

The following composition comprising the respective first, second and third components was prepared.

| First component | |
|---|---|
| 2-HH2B(F, F)-C | 5.0 % [refer to (1-2)] |
| 3-HH2B(F, F)-C | 5.0 % [refer to (1-2)] |
| 4-HH2B(F, F)-C | 5.0 % [refer to (1-2)] |

| | |
|---|---|
| 5-HH2B(F, F)-C | 5.0 % [refer to (1-2)] |

(continued)

| Second component | |
|---|---|
| 3010-BEB-C | 3.0 % [refer to (2-3-3)] |
| 3-HEB(F)-C | 3.0 % [refer to (2-4-7)] |
| 3-H2B-C | 3.0 % [refer to (2-3-1)] |
| 3-HEB-C | 4.0 % [refer to (2-3-2)] |
| 3-DB-C | 7.0 % [refer to (2-1-3)] |
| 2-BB-C | 6.0 % [refer to (2-1-2)] |
| 4-BB-C | 6.0 % [refer to (2-1-2)] |
| Third component | |
| 3-HB-2 | 3.0 % [refer to (3-1-4)] |
| 3-HB-O2 | 17.0 % [refer to (3-1-4)] |
| 3-HBB-1 | 3.0 % [refer to (3-2-2)] |
| 3-HBB-O1 | 3.0 % [refer to (3-2-2)] |
| V-HHB-1 | 4.0 % [refer to (3-2-1)] |
| 3-HHB-O1 | 5.0 % [refer to (3-2-1)] |
| 3-HHB-1 | 6.0 % [refer to (3-2-1)] |
| 3-HB(F)TB-2 | 4.0 % [refer to (3-2-5)] |
| 3-HB(F)TB-3 | 3.0 % [refer to (3-2-5)] |

This composition had a clearing point of 82.5°C, a viscosity of 35.0 mPa·s, a refractive index anisotropy of 0.130 and a threshold voltage of 1.29 V. Further, the composition had a δ of 0.005, a dH of 0.02 and a dUV of 0.01.

Example 17

The following liquid crystal composition comprising the respective first, second, third and fourth components was prepared.

| First component | |
|---|---|
| 2-H2HB(F, F)-C | 5.0 % [refer to (1-1)] |
| 3-H2HB(F, F)-C | 5.0 % [refer to (1-1)] |
| 4-H2HB(F, F)-C | 5.0 % [refer to (1-1)] |
| Second component | |
| 2-HB(F)-C | 13.0 % [refer to (2-4-1)] |
| 3-HB(F)-C | 12.0 % [refer to (2-4-1)] |
| 3-HH2B-C | 3.0 % [refer to (2-3-4)] |
| 3-HBEB(F)-C | 4.0 % [refer to (2-4-5)] |
| 2-HBB(F)-C | 3.0 % [refer to (2-4-8)] |
| 4-PyBB-F | 5.0 % [refer to (2-5-3)] |
| Third component | |
| 2-PyB-3 | 6.0 % [refer to (3-1-7)] |
| 3-PyB-O2 | 5.0 % [refer to (3-1-7)] |
| 5-HBBH-3 | 3.0 % [refer to (3-3-1)]. |
| 5-HB(F)BH-3 | 3.0 % [refer to (3-3-2)] |
| 1O1-HBBH-5 | 5.0 % [refer to (3-3-1)] |
| Fourth component | |
| 3-HBEB-F | 4.0 % [refer to (4-18)] |
| 3-HHEB(F)-F | 4.0 % [refer to (4-19)] |
| 3-HBEB(F)-F | 4.0 % [refer to (4-20)] |

(continued)

| Fourth component | |
|---|---|
| 3-HBB(F)-F | 4.0 % [refer to (4-6)] |
| 3-HBB(F, F)-F | 4.0 % [refer to (4-8)] |
| Other component: | |
| 2-HH2B (F) - C | 3.0 % |

This composition had a clearing point of 84.6°C, a viscosity of 47.3 mPa·s, a refractive index anisotropy of 0.131 and a threshold voltage of 1.19 V. Further, the composition had a δ of 0.005, a dH of 0.02 and a dUV of 0.03.

Example 18

The following liquid crystal composition comprising the respective first, second and third components was prepared.

| First component | |
|---|---|
| 2-H2BB(F, F)-C | 5.0 % [refer to (1-3)] |
| 3-H2BB(F, F)-C | 5.0 % [refer to (1-3)] |
| 2-HH2B(F, F)-C | 5.0 % [refer to (1-2)] |
| 3-HH2B(F, F)-C | 5.0 % [refer to (1-2)] |
| Second component | |
| 1V2-BEB(F, F)-C | 6.0 % [refer to (2-4-3)] |
| 1O1-HB-C | 4.0 % [refer to (2-1-1)] |
| 3-HB-C | 10.0 % [refer to (2-1-1)] |
| Third component | |
| 3-BVB-1 | 3.0 % [refer to (3-1-6)] |
| 3-BVB-O1 | 3.0 % [refer to (3-1-6)] |
| 3-HB-O2O1 | 2.0 % [refer to (3-1-4)] |
| 3-H2H-O2O1 | 2.0 % [refer to (3-1-2)] |
| 3-BTB-O2O1 | 2.0 % [refer to (3-1-5)] |
| 5-HVH-O1 | 3.0 % [refer to (3-1-3)] |
| 5-HH-VFF | 17.0 % [refer to (3-1-1)] |
| 3-HHEB-2 | 3.0 % [refer to (3-2-9)] |
| 3-HEBEB-1 | 2.0 % [refer to (3-2-10)] |
| VFF-HHB-1 | 7.0 % [refer to (3-2-1)] |
| 3-HHB-1 | 6.0 % [refer to (3-2-1)] |
| 3-PyBH-2 | 4.0 % [refer to (3-2-3)] |
| 4-PyBB-4 | 3.0 % [refer to (3-2-4)] |
| VFF-HBB-1 | 3.0 % [refer to (3-2-2)] |

This composition had a clearing point of 92.0°C, a viscosity of 40.0 mPa·s, a refractive index anisotropy of 0.168 and a threshold voltage of 1.24 V. Further, the composition had a δ of 0.004, a dH of 0.02 and a dUV of 0.01.

Example 19

The following liquid crystal composition comprising a compound represented by the formula (5) as the fifth component in addition to the respective first, second, and third components was prepared.

| First component | |
|---|---|
| 2-H2BB(F, F)-C | 7.0 % [refer to (1-3)] |

(continued)

| First component | |
|---|---|
| 3-H2BB(F, F)-C | 5.0 % [refer to (1-3)] |
| 4-H2BB(F, F)-C | 5.0 % [refer to (1-3)] |
| 5-H2BB(F, F)-C | 5.0 % [refer to (1-3)] |
| Second component | |
| 2-HB(F)-C | 13.0 % [refer to (2-4-1)] |
| 3-HB(F)-C | 12.0 % [refer to (2-4-1)] |
| 3-PyBB-F | 6.0 % [refer to (2-5-3)] |
| 4-PyBB-F | 5.0 % [refer to (2-5-3)] |
| Third component | |
| 3-HHB-1 | 10.0 % [refer to (3-2-1)] |
| 3-H2BTB-2 | 4.0 % [refer to (3-2-6)] |
| 3-H2BTB-3 | 4.0 % [refer to (3-2-6)] |
| 3-H2BTB-4 | 4.0 % [refer to (3-2-6)] |
| 3-HB(F)TB-2 | 5.0 % [refer to (3-2-5)] |
| 3-HB(F)TB-3 | 5.0 % [refer to (3-2-5)] |
| Fifth component | |
| 4-HEB-5 | 5.0 % [refer to (5-1)] |
| 2-HEB-O6 | 5.0 % [refer to (5-1)] |

This composition had a clearing point of 85.3°C, a viscosity of 40.7 mPa·s, a refractive index anisotropy of 0.160 and a threshold voltage of 1.25 V. Further, the composition had a δ of 0.005, a dH of 0.03 and a dUV of 0.02.

Example 20

The following liquid crystal composition comprising the respective first, second, third, fourth and fifth components was prepared.

| First component | |
|---|---|
| 2-HH2B(F, F)-C | 5.0 % [refer to (1-2)] |
| 3-HH2B(F, F)-C | 5.0 % [refer to (1-2)] |
| 4-HH2B(F, F)-C | 5.0 % [refer to (1-2)] |
| 5-HH2B(F, F)-C | 5.0 % [refer to (1-2)] |
| Second component | |
| 301-BEB(F)-C | 6.0 % [refer to (2-4-2)] |
| 3-DB-C | 7.0 % [refer to (2-1-3)] |
| 4-DB-C | 7.0 % [refer to (2-1-3)] |
| 2-BB-C | 6.0 % [refer to (2-1-2)] |
| 4-BB-C | 6.0 % [refer to (2-1-2)] |
| Third component | |
| 3-HHB-3 | 10.0 % [refer to (3-2-1)] |
| 3-HHB-1 | 6.0 % [refer to (3-2-1)] |
| 3-HB(F)TB-2 | 4.0 % [refer to (3-2-5)] |
| 3-HB(F)TB-3 | 3.0 % [refer to (3-2-5)] |
| Fourth component | |
| 7-BEB-F | 2.0 % [refer to (4-2)] |
| 3-HEBEB-F | 2.0 % [refer to (4-21)] |

(continued)

| Fourth component | |
|---|---|
| 3-HEB(F)-F | 3.0 % [refer to (4-16)] |
| 3-BEB(F)-F | 3.0 % [refer to (4-17)] |
| Fifth component | |
| 4-BEB-3 | 5.0 % [refer to (5-2)] |
| 4-HEB-3 | 5.0 % [refer to (5-1)] |
| 1O-BEB-2 | 5.0 % [refer to (5-2)] |

This composition had a clearing point of 96.7°C, a viscosity of 49.8 mPa·s, a refractive index anisotropy of 0.136 and a threshold voltage of 1.30 V. Further, the composition had a δ of 0.006, a dH of 0.03 and a dUV of 0.02.

## Claims

**1.** A liquid crystal composition comprising:

(1) as a first component at least one compound selected from the group of compounds represented by the following formulae (1-1), (1-2) and (1-3):

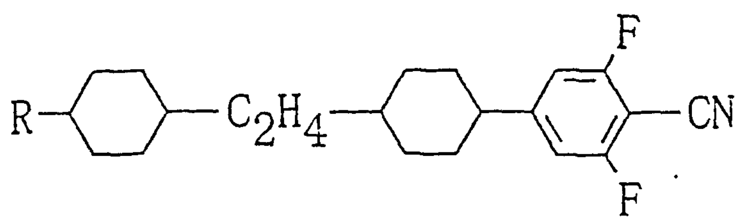 (1-1)

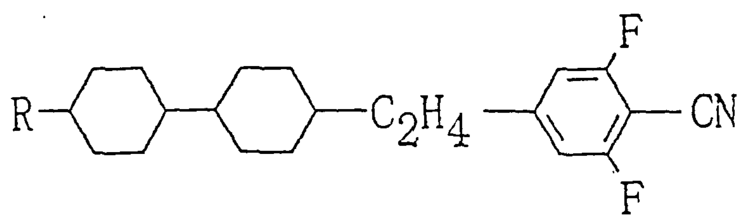 (1-2)

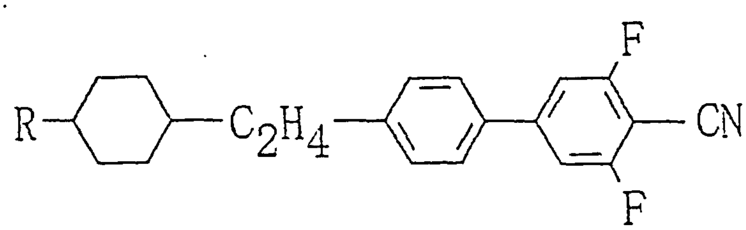 (1-3)

wherein R represents an alkyl group having 1 to 10 carbon atoms, and any hydrogen atoms in the formulae may be heavy hydrogen atoms,
(2) as a second component at least one compound selected from the group of compounds represented by the following formulae (2-1), (2-2), (2-3), (2-4) and (2-5):

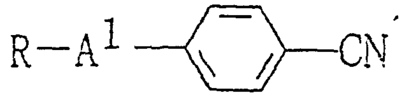

(2-1)

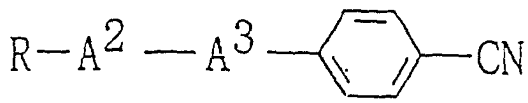

(2-2)

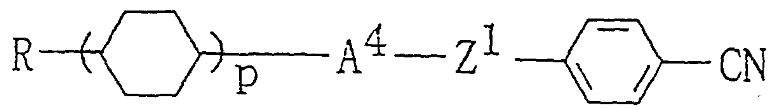

(2-3)

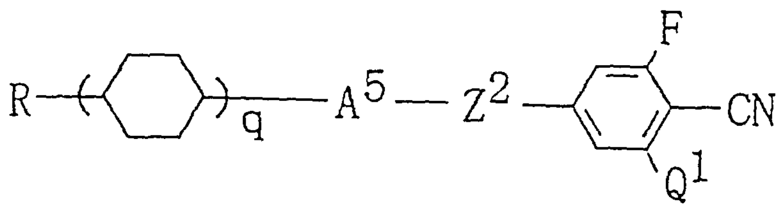

(2-4)

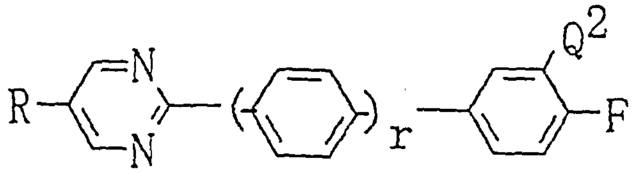

(2-5)

wherein R represents an alkyl group having 1 to 10 carbon atoms, and any one methylene group contained in the group or two or more methylene groups which are not adjacent to each other may be replaced by oxygen atoms or -CH=CH- groups, but a methylene group at the group end is not replaced by an oxygen atom; $Z^1$ represents -COO- or $-CH_2CH_2-$; $Z^2$ represents -COO- or a single bond; $Q^1$ and $Q^2$ each represent independently a hydrogen atom or a fluorine atom; $A^1$ represents trans-1,4-cyclohexylene, 1,4-phenylene, 1,3-pyrimidine-2,5-diyl or trans-1,3-dioxane-2,5-diyl; $A^2$ and $A^4$ represent each independently trans-1,4-cyclohexylene or 1,4-phenylene; $A^3$ represents trans-1,4-cyclohexylene, 1,4-phenylene or pyrimidine-2,5-diyl; $A^5$ represents trans-1,4-cyclohexylene or 1,4-phenylene in which at least one hydrogen atom on the 2-, 3-, 5- and 6-positions may be substituted with a fluorine atom; p, q and r each represent independently 0 or 1; and any hydrogen atoms in the formulae may be heavy hydrogen atoms, and

(3) as a third component at least one compound selected from the group of compounds represented by the following formulae (3-1), (3-2) and (3-3):

$$R—B^1—Z^3—B^2—R' \qquad (3\text{-}1)$$

$$R—B^3—Z^4—B^4—Z^5—B^5—R' \qquad (3\text{-}2)$$

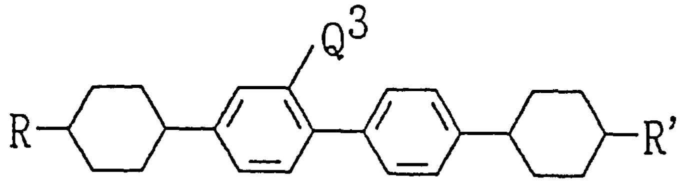

(3-3)

wherein R and R' represent independently an alkyl group having 1 to 10 carbon atoms, and any one methylene group contained in the groups or two or more methylene groups which are not adjacent to each other may be replaced by oxygen atoms or -CH=CH-groups, but a methylene group at the group end is not replaced by an oxygen atom; hydrogen atoms contained in the groups R and R' may be substituted with fluorine atoms; $B^1$ represents trans-1,4-cyclohexylene, 1,4-phenylene or 1,3-pyrimidine-2,5-diyl; $B^2$ and $B^5$ each represent independently trans-1,4-cyclohexylene or 1,4-phenylene; $B^3$ represents trans-1,4-cyclohexylene or pyrimidine-2,5-diyl; $B^4$ represents trans-1,4-cyclohexylene or 1,4-phenylene in which at least one hydrogen atom on the 2-, 3-, 5- and 6-positions may be substituted with a fluorine atom; $Z^3$ represents $-CH_2CH_2-$, -CH=CH-, -C≡C- or a single bond; $Z^4$ represents -COO-, $-CH_2CH_2-$ or a single bond; $Z^5$ represents -COO-, -CH=CH-, -C≡C- or a single bond; $Q^3$ represents a hydrogen atom or a fluorine atom; and any hydrogen atoms in the formulae may be heavy hydrogen atoms.

**2.** The liquid crystal composition as described in claim 1, wherein the mixed proportions of the first, second and third components are 3 to 60 %, 3 to 55 % and 3 to 70 % respectively based on the whole amount of the liquid crystal composition.

**3.** The liquid crystal composition as described in claim 1 or 2, further comprising a compound represented by the formula (4):

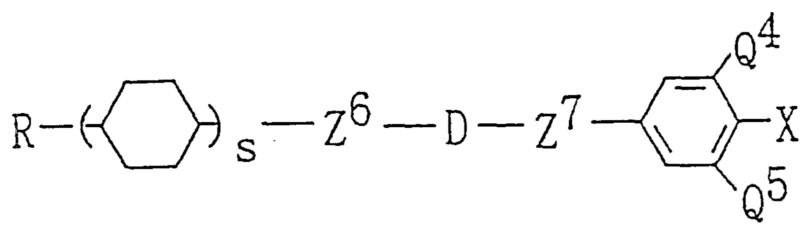

(4)

wherein R represents an alkyl group having 1 to 10 carbon atoms or an alkenyl group having 2 to 10 carbon atoms; D represents trans-1,4-cyclohexylene, 1,4-phenylene or trans-1,3-dioxane-2,5-diyl; $Q^4$ and $Q^5$ represent independently a hydrogen atom or a fluorine atom; $Z^6$ and $Z^7$ represent independently-COO- or a single bond; s represents 0, 1 or 2; X represents a fluorine atom or a chlorine atom; and any hydrogen atoms in the formulae may be heavy hydrogen atoms.

**4.** The liquid crystal composition as described in any of claims 1 to 3, further comprising a compound represented by the formula (5):

$$R\text{-}E^1\text{-}COO\text{-}E^2\text{-}R' \qquad (5)$$

wherein R and R' represent independently an alkyl group or alkoxy group having 1 to 10 carbon atoms; $E^1$ and $E^2$ represent independently trans-1,4-cyclohexylene or 1,4-phenylene; and any hydrogen atoms in the formula may be heavy hydrogen atoms.

**5.** A liquid crystal display element comprising the liquid crystal composition as described in any of claims 1 to 4.

## Patentansprüche

1. Flüssigkristallzusammensetzung, umfassend:

(1) als erste Komponente zumindest eine Verbindung, ausgewählt aus der Gruppe von Verbindungen mit den folgenden Formeln (1-1), (1-2) und (1-3):

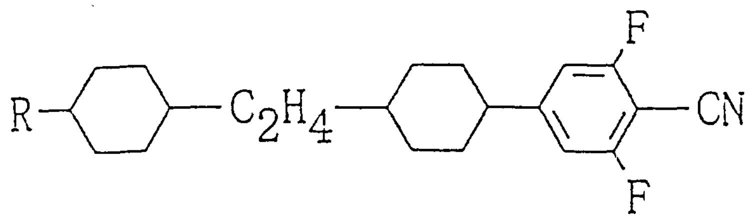

(1-1)

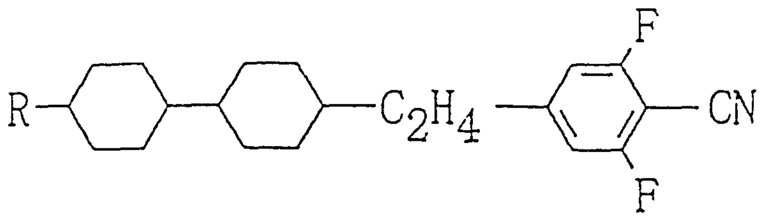

(1-2)

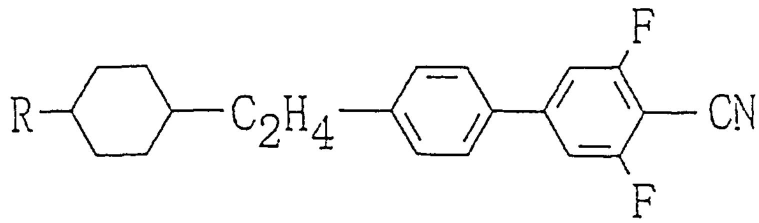

(1-3)

worin R eine Alkyl-Gruppe mit 1 bis 10 Kohlenstoffatomen ist und jedes Wasserstoffatom in den Formeln ein schweres Wasserstoffatom sein kann;

(2) als zweite Komponente zumindest eine Verbindung, ausgewählt aus der Gruppe von Verbindungen mit den folgenden Formeln (2-1), (2-2), (2-3), (2-4) und (2-5):

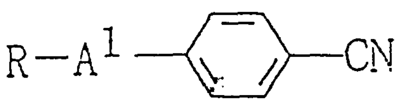

(2-1)

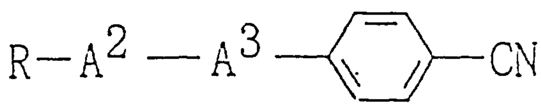

(2-2)

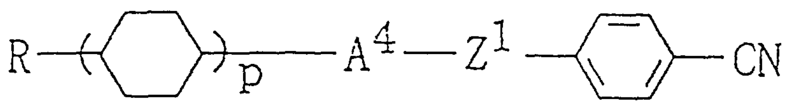

(2-3)

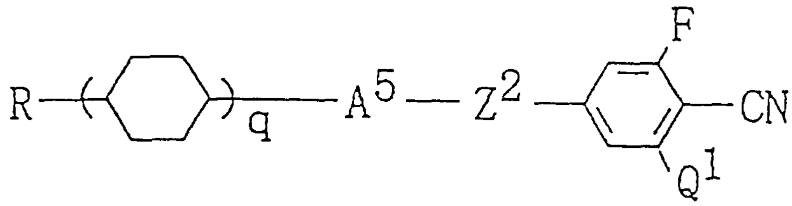

(2-4)

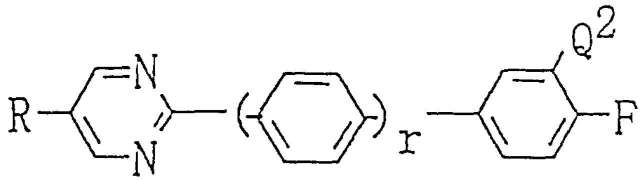

(2-5)

worin R eine Alkyl-Gruppe mit 1 bis 10 Kohlenstoffatomen ist, und jede Methylen-Gruppe in der Gruppe oder zwei oder mehrere Methylen-Gruppen, die nicht zueinander benachbart sind, durch Sauerstoffatome oder -CH=CH-Gruppen ersetzt sein können, wobei eine Methylen-Gruppe an dem Gruppenende nicht durch ein Sauerstoffatom ersetzt ist; $Z^1$ -COO- oder $-CH_2CH_2-$ ist; $Z^2$ -COO- oder eine Einfachbindung ist; $Q^1$ und $Q^2$ jeweils unabhängig ein Wasserstoffatom oder ein Fluoratom sind; $A^1$ trans-1,4-Cyclohexylen, 1,4-Phenylen, 1,3-Pyrimidin-2,5-diyl oder trans-1,3-Dioxan-2,5-diyl ist; $A^2$ und $A^4$ jeweils unabhängig trans-1,4-Cyclohexylen oder 1,4-Phenylen sind; $A^3$ trans-1,4-Cyclohexylen, 1,4-Phenylen oder Pyrimidin-2,5-diyl ist; $A^5$ trans-1,4-Cyclohexylen oder 1,4-Phenylen ist, worin zumindest ein Wasserstoffatom an den 2-, 3-, 5- und 6-Positionen durch ein Fluoratom ersetzt sein kann; p, q und r jeweils unabhängig 0 oder 1 sind; und irgendein Wasserstoffatom in den Formeln ein schweres Wasserstoffatom sein kann, und

(3) als dritte Komponente zumindest eine Verbindung, ausgewählt aus der Gruppe von Verbindungen mit den folgenden Formeln (3-1), (3-2) und (3-3):

$$R—B^1—Z^3—B^2—R' \qquad (3\text{-}1)$$

$$R—B^3—Z^4—B^4—Z^5—B^5—R' \qquad (3\text{-}2)$$

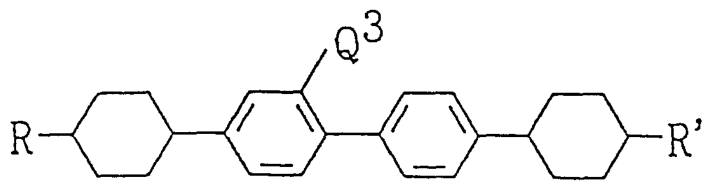

(3-3)

worin R und R' unabhängig eine Alkyl-Gruppe mit 1 bis 10 Kohlenstoffatomen sind und jede Methylen-Gruppe in den Gruppen oder zwei oder mehrere Methylen-Gruppen, die nicht zueinander benachbart sind, durch Sauerstoffatome oder -CH=CH- Gruppen ersetzt sein können, wobei aber eine Methylen-Gruppe am Gruppenende nicht durch ein Sauerstoffatom ersetzt ist; worin Wasserstoffatome, die in den Gruppen R und R' enthalten sind, durch Fluoratome substituiert sein können; $B^1$ trans-1,4-Cyclohexylen, 1,4-Phenylen oder 1,3-Pyrimidin-2,5-diyl ist; $B^2$ und $B^5$ jeweils unabhängig trans-1,4-Cyclohexylen oder 1,4-Phenylen sind; $B^3$ trans-1,4-Cyclohexylen oder Pyrimidin-2,5-diyl ist; $B^4$ trans-1,4-Cyclohexylen oder 1,4 Phenylen ist, worin zumindest ein Wasserstoffatom an der 2-, 3-, 5- und 6-Position durch ein Fluoratom substituiert sein kann; $Z^3$ $-CH_2CH_2-$, -CH=CH-, -C≡C- oder eine Einfachbindung ist; $Z^4$ -COO-, $-CH_2CH_2-$ oder eine Einfachbindung ist; $Z^5$ -COO-, -CH=CH-, -C≡C- oder eine Einfachbindung ist; $Q^3$ ein Wasserstoffatom oder ein Fluoratom ist; und jedes Wasserstoffatom in den Formeln ein schweres Wasserstoffatom sein kann.

2. Flüssigkristallzusammensetzung nach Anspruch 1, worin die gemischten Anteile der ersten, zweiten und dritten Komponenten 3 bis 60 %, 3 bis 55 % bzw. 3 bis 70 % sind, bezogen auf die Gesamtmenge der Flüssigkristallzusammensetzung.

3. Flüssigkristallzusammensetzung nach Anspruch 1 oder 2, weiter umfassend eine Verbindung mit der Formel (4):

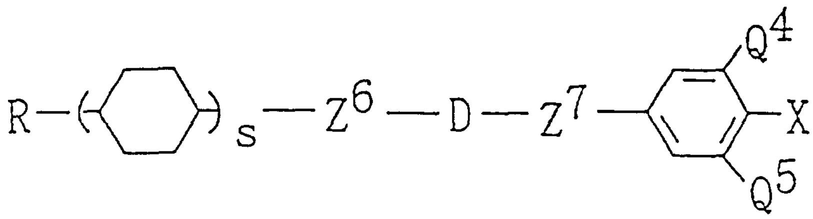

(4)

worin R eine Alkyl-Gruppe mit 1 bis 10 Kohlenstoffatomen oder eine Alkenyl-Gruppe mit 2 bis 10 Kohlenstoffatomen ist; D trans-1,4-Cyclohexylen, 1,4-Phenylen oder trans-1,3-Dioxan-2,5-diyl ist; $Q^4$ und $Q^5$ unabhängig ein Wasserstoffatom oder ein Fluoratom sind; $Z^6$ und $Z^7$ unabhängig -COO- oder eine Einfachbindung sind; s 0, 1 oder 2 ist; X ein Fluoratom oder Chloratom ist; und jedes Wasserstoffatom in den Formeln ein schweres Wasserstoffatom sein kann.

4. Flüssigkristallzusammensetzung nach einem der Ansprüche 1 bis 3, weiterhin umfassend eine Verbindung mit der Formel (5):

$$R\text{-}E^1\text{-}COO\text{-}E^2\text{-}R' \quad (5)$$

worin R und R' unabhängig jeweils eine Alkyl-Gruppe oder Alkoxy-Gruppe mit 1 bis 10 Kohlenstoffatomen sind; $E^1$ und $E^2$ unabhängig trans-1,4-Cyclohexylen oder 1,4-Phenylen sind; und worin jedes Wasserstoffatom in der Formel ein schweres Wasserstoffatom sein kann.

5. Flüssigkristall-Anzeigeelement, umfassend die Flüssigkristallzusammensetzung wie in einem der Ansprüche 1 bis 4 beschrieben.

**Revendications**

1. Composition de cristal liquide, comprenant :

(1) comme premier composant, au moins un composé sélectionné dans le groupe de composés représentés par les formules (1-1), (1-2) et (1-3) ci-dessous:

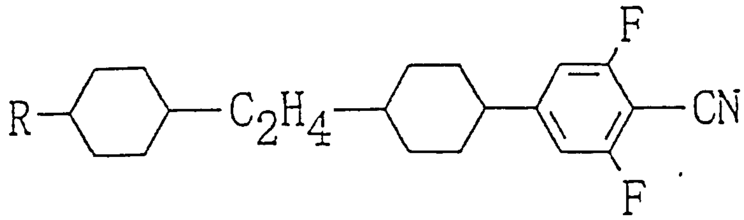

(1-1)

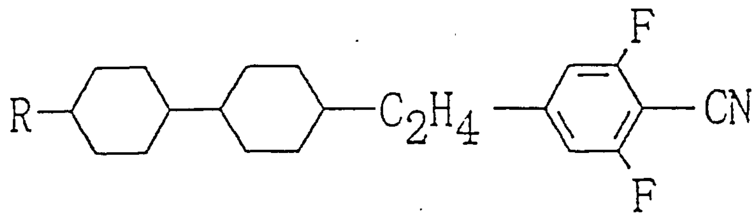

(1-2)

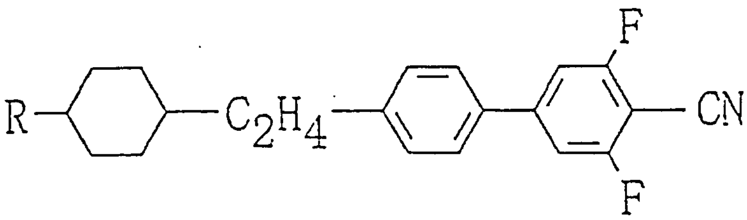

(1-3)

dans lesquelles R représente un groupe alkyle qui compte de 1 à 10 atomes de carbone, et tout atome d'hydrogène dans les formules peut être un atome d'hydrogène lourd,

(2) comme deuxième composant, au moins un composé sélectionné dans le groupe de composés représentés par les formules (2-1), (2-2), (2-3), (2-4) et (2-5) ci-dessous:

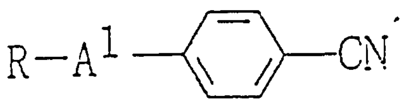

(2-1)

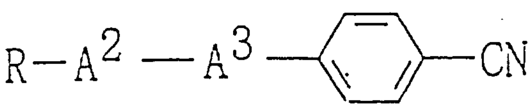

(2-2)

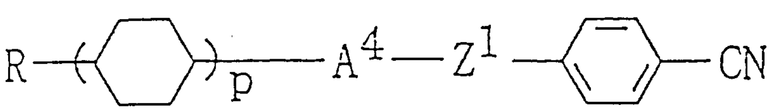

(2-3)

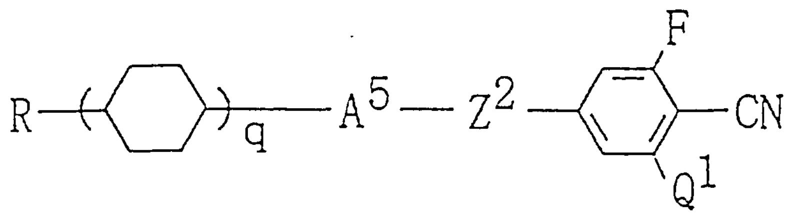

(2-4)

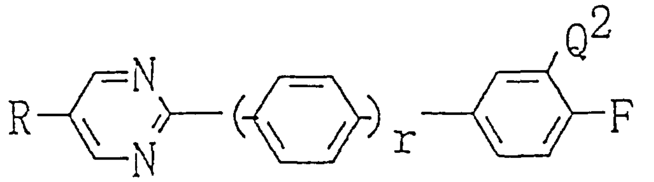

(2-5)

dans lesquelles R représente un groupe alkyle qui compte de 1 à 10 atomes de carbone, et tout groupe méthylène contenu dans le groupe ou deux ou plusieurs groupes méthylène qui ne sont pas adjacents un à l'autre peuvent être remplacés par des atomes d'oxygène ou par des groupes -CH=CH-, mais un groupe méthylène situé à l'extrémité du groupe n'est pas remplacé par un atome d'oxygène; $Z^1$ représente -COO- ou $-CH_2-CH_2-$; $Z^2$ représente -COO- ou une simple liaison; $Q^1$ et $Q^2$ représentent chacun indépendamment un atome d'hydrogène ou un atome de fluor; $A^1$ représente le trans-1,4-cyclohexylène, le 1,4-phénylène, le 1,3-pyrimidine-2,5-diyle ou le trans-1,3-dioxane-2,5-diyle; $A^2$ et $A^4$ représentent chacun indépendamment le trans-1,4-cyclohexylène ou le 1,4-phénylène; $A^3$ représente le trans-1,4-cyclohexylène, le 1,4-phénylène ou le pyrimidine-2,5-diyle; $A^5$ représente le trans-1,4-cyclohexylène ou le 1,4-phénylène dans lesquels au moins un atome d'hydrogène en position 2-, 3, 5- ou 6- peut être substitué par un atome de fluor; p, q et r représentent chacun indépendamment 0 ou 1, et tout atome d'hydrogène dans les formules pouvant être un atome d'hydrogène lourd, et

(3) comme troisième composant, au moins un composé sélectionné dans le groupe de composés représentés par les formules (3-1), (2-2) et (3-3) ci-dessous:

$$R—B^1—Z^3—B^2—R' \qquad (3\text{-}1)$$

$$R—B^3—Z^4—B^4—Z^5—B^5—R' \qquad (3\text{-}2)$$

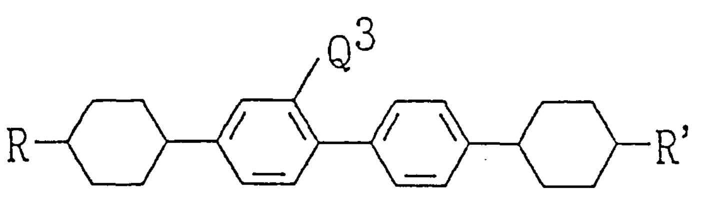

(3-3)

dans lesquelles R et R' représentent indépendamment un groupe alkyle qui compte de 1 à 10 atomes de carbone, et tout groupe méthylène contenu dans le groupe ou deux ou plusieurs groupes méthylène qui ne sont pas adjacents un à l'autre peuvent être remplacés par des atomes d'oxygène ou par des groupes -CH=CH-, mais un groupe méthylène situé à l'extrémité du groupe n'est pas remplacé par un atome d'oxygène; les atomes d'hydrogène contenus dans les groupes R et R' peuvent être substitués par des atomes de fluor; $B^1$ représente le trans-1,4-cyclohexylène, le 1,4-phénylène ou le 1,3-pyrimidine-2,5-diyle; $B^2$ et $B^5$ représentent chacun indépendammment le trans-1,4-cyclohexylène ou le 1,4-phénylène; $B^3$ représente le trans-1,4-cyclohexylène ou le pyrimidine-2,5-diyle; $B^4$ représente le trans-1,4-cyclohexylène ou le 1,4-phénylène dans lesquels au moins un atome d'hydrogène en position 2-, 3-, 5- ou 6- peut être substitué par un atome de fluor; $Z^3$ représente $-CH_2-CH_2-$, -CH=CH-, -C=C- ou une simple liaison; Z4 représente -COO-, $-CH_2-CH_2-$ ou une simple liaison; $Z^5$ représente -COO-, -CH=CH-, -C=C- ou une simple liaison; $Q^3$ représente un atome d'hydrogène ou un atome de fluor; et tous les atomes d'hydrogène dans les formules peuvent être des atomes d'hydrogène lourd.

**2.** Composition de cristaux liquides selon la revendication 1, dans laquelle les proportions de mélange du premier, du deuxième et du troisième composant sont de 3 à 60 %, de 3 à 55 % et de 3 à 70 %, respectivement, de la quantité totale de la composition de cristaux liquides.

**3.** Composition de cristaux liquides selon la revendication 1 ou 2, comprenant en outre un composé représenté par la formule (4):

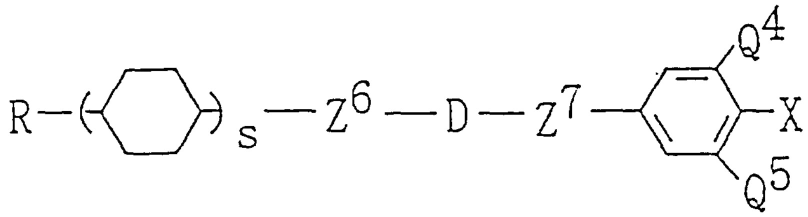

(4)

dans laquelle R représente un groupe alkyle qui compte de 1 à 10 atomes de carbone ou un groupe alcényle qui compte de 2 à 10 atomes de carbone; D représente le trans-1,4-cyclohexylène, le 1,4-phénylène, ou le trans-1,3-dioxane-2,5-diyle; $Q^4$ et $Q^5$ représentent chacun indépendamment un atome d'hydrogène ou un atome de fluor; $Z^6$ et $Z^7$ représentent indépendamment -COO- ou une simple liaison; s représente 0, 1 ou 2; X représente un atome de fluor ou un atome de chlore; et tous les atomes d'hydrogène dans

**4.** Composition de cristaux liquides selon les revendications 1 à 3, comprenant en outre un composé représenté par la formule (5):

$$R - E^1 - COO - E^2 - R' \quad (5)$$

dans laquelle R et R' représentent chacun indépendamment un groupe alkyle ou un groupe alcoxy qui compte de 1 à 10 atomes de carbone; $E^1$ et $E^2$ représentent chacun indépendamment le trans-1,4-cyclohexylène ou le 1,4-phénylène; et tous les atomes d'hydrogène dans la formule peuvent être des atomes d'hydrogène lourd.

**5.** Elément d'affichage à cristaux liquides comprenant la composition de cristaux liquides selon les revendications 1 à 4.